# EUROPÄISCHE PATENTSCHRIFT

(11) **EP 3 966 063 B1**
(45) Veröffentlichungstag und Bekanntmachung des Hinweises auf die Patenterteilung: **20.11.2024**
(21) Anmeldenummer: 20726079.5
(22) Anmeldetag: 13.05.2020
(51) Int. Cl.: B60K 35/10, B60K 35/28, B60K 35/29, G06F 3/01, G06F 3/0482, G06F 3/0488

(54) **VERFAHREN UND BEDIENSYSTEM ZUM ERFASSEN EINER NUTZEREINGABE FÜR EINE EINRICHTUNG EINES FAHRZEUGS**
METHOD AND OPERATING SYSTEM FOR DETECTING A USER INPUT FOR A DEVICE OF A VEHICLE
PROCÉDÉ ET SYSTÈME DE COMMANDE UTILISATEUR PERMETTANT DE DÉTECTER UNE ENTRÉE D'UTILISATEUR RELATIVE À UN DISPOSITIF D'UN VÉHICULE

(30) Priorität: 08.07.2019 DE 102019210010
(43) Veröffentlichungstag der Anmeldung: 16.03.2022
(73) Patentinhaber: VOLKSWAGEN AKTIENGESELLSCHAFT, 38440 Wolfsburg (DE)
(72) Erfinder: KASSNER, Astrid, 10117 Berlin (DE)
(86) Internationale Anmeldenummer: PCT/EP2020/063395
(87) Internationale Veröffentlichungsnummer: WO 2021/004683

(56) Entgegenhaltungen:
- EP-A1- 3 126 934
- DE-A1- 102008 051 756

## Beschreibung

Die vorliegende Erfindung betrifft ein Verfahren und ein Bediensystem zum Erfassen einer Nutzereingabe für eine Einrichtung eines Fahrzeugs.

Der moderne Alltag ist durch eine Vielzahl von Einrichtungen geprägt, deren Bedienung in verschiedenen Kontexten auf unterschiedliche Weisen erfolgen kann. Hierzu wurden verschiedene Bedienkonzepte vorgeschlagen, beispielsweise eine Steuerung mittels Tastaturen, Gesten, Sprache oder Zeigergeräten, die je nach Einsatzgebiet spezifische Vor- und Nachteile aufweisen. In manchen Fällen können zudem zum Erzielen der gleichen Systemreaktion verschiedene Bedienmodalitäten vorgesehen sein, die ein Nutzer kennen und zwischen denen er sich entscheiden muss.

Es hat sich gezeigt, dass die Auswahl zwischen unterschiedlichen Bedienmodalitäten oder verschiedenen Bedienmöglichkeiten, um eine bestimmte Systemreaktion hervorzurufen, den Nutzer überfordern kann. Die zur Verfügung stehenden Typen von Bedienhandlungen können beispielsweise anhand eines Handbuchs oder eines Einführungsvideos erlernt werden, etwa indem ein Video bei der ersten Inbetriebnahme des Systems abgespielt wird und/oder später wieder aufrufbar ist. Der Nutzer wird dabei oft mit einer größeren Informationsmenge konfrontiert, als er verarbeiten kann, und er muss erhebliche Zeit aufwenden, um die Bedienung zu erlernen.

In der US 2015/0175172 A1 wird ein System für gestenbasierte Eingaben mit einer haptischen Rückmeldung beschrieben. Es wird eine Geste erfasst und eine entsprechende Rückmeldung ausgegeben. Zudem kann auch eine Sprachsteuerung erfolgen. Es werden verschiedene Gesten beschrieben, die mittels einer Kamera erfasst werden können und die verschiedenen steuerbaren Aktionen des Systems zugeordnet sind.

Aus der US 2004/0189720 A1 ist eine Architektur zum Steuern eines Computers mittels Gesten bekannt, bei der Gesten in Kombination mit Sprachbefehlen verwendet werden können.

Die DE 10 2009 039 114 A1 schlägt eine Bedienvorrichtung für ein Fahrzeug vor, bei der ein Körperteil eines Nutzers in einem von drei Raumbereichen detektiert und bei einem grafischen Objekt ein zugeordnetes Objekts angezeigt wird. Beispielsweise können eine Zahl und eine Skala angezeigt werden.

Die US 2018/0307347 A1 beschreibt ein Verfahren zum Detektieren von Gesten, wobei ein kapazitiver Sensor verwendet wird. Der Nutzer kann in einer Datenbank für bestimmte Kommandos Gesten definieren sowie vorgegebene Gesten durch Betrachten einer Anleitung erlernen.

Aus der DE 10 2006 037 156 A1 ist ein Verfahren zum Betreiben einer interaktiven Bedienvorrichtung bekannt, bei dem ein Bedienelement angezeigt und eine Annäherung eines Nutzers an das Bedienelement detektiert wird. Das Bedienelement wird dann optimiert dargestellt, etwa indem es vergrößert wird. Die Anpassung der Darstellung kann zudem mittels einer Geste gesteuert werden.

Aus der DE 10 2008 051 756 A1 ist ein Verfahren nach dem Oberbegriff des Anspruchs 1 bekannt.

Der vorliegenden Erfindung liegt die Aufgabe zugrunde, ein Verfahren und ein Bediensystem bereitzustellen, bei denen ein Nutzer dabei unterstützt wird, verschiedene Bedienmöglichkeiten zu erkennen und anzuwenden.

Erfindungsgemäß wird diese Aufgabe durch ein Verfahren mit den Merkmalen des Anspruchs 1 und ein Bediensystem mit den Merkmalen des Anspruchs 8 gelöst. Vorteilhafte Ausgestaltungen und Weiterbildungen ergeben sich aus den abhängigen Ansprüchen.

Bei dem erfindungsgemäßen Verfahren zum Erfassen einer Nutzereingabe für eine Einrichtung eines Fahrzeugs wird eine bedienbare Funktion der Einrichtung erfasst und in Abhängigkeit von der bedienbaren Funktion werden ein erster und ein zweiter potentieller Bedienhandlungstyp bestimmt. Ein bevorzugter Bedienhandlungstyp wird bestimmt und in Abhängigkeit von dem bevorzugten Bedienhandlungstyp wird eine Ausgabe erzeugt und ausgegeben. Dabei umfasst die Ausgabe ein Bedienobjekt, anhand dessen einem Nutzer der bevorzugte Bedienhandlungstyp angezeigt wird; wobei die bestimmten potentiellen Bedienhandlungstypen verschiedenen Bedienmodalitäten zugeordnet sind; und wobei eine bevorzugte Bedienmodalität bestimmt wird und der bevorzugte Bedienhandlungstyp anhand der bevorzugten Bedienmodalität bestimmt wird.

Dadurch kann ein Nutzer vorteilhafterweise besonders leicht erkennen, welche Art der Bedienung aktuell bevorzugt ist und welche Eingaben besonders geeignet sind.

Bei dem Verfahren wird zunächst eine bedienbare Funktion erfasst. Dabei wird insbesondere erfasst, welche Funktion oder welche Funktionen aktuell bedienbar sind. Es kann sich dabei beispielsweise um einen Zustand einer Einrichtung handeln, in dem eine Benutzereingabe oder eine andere Interaktion eines Nutzers mit der Einrichtung erfassbar ist. Zur Bedienung ist zumindest eine Bedienhandlung vorgesehen, mittels welcher der Nutzer mit der Einrichtung interagieren kann. Bei einer Interaktion des Nutzers mit der Einrichtung wird beispielsweise eine Bedienhandlung des Nutzers durch das Bediensystem erfasst und es wird ein Steuersignal erzeugt und an die Einrichtung übertragen, um eine Funktion zu aktivieren oder zu deaktivieren, einen einstellbaren Parameter einzugeben oder eine Anweisung an die Einrichtung zu übertragen.

Bei einer Bedienung kann einer Bedienhandlung, mittels welcher aktuell eine Bedienung einer Funktion vorgenommen werden kann, ein bestimmter Bedienhandlungstyp zugeordnet werden. Das heißt insbesondere, die konkrete, durch den Nutzer tatsächlich durchgeführte Bedienhandlung wird einem abstrakten Modell einer Bedienhandlung zugeordnet.

Bei dem Verfahren wird in Abhängigkeit von der bedienbaren Funktion zumindest ein erster und ein zweiter potentieller Bedienhandlungstyp für die bedienbare Funktion bestimmt, insbesondere können auch mehr potentielle Bedienhandlungstypen bestimmt werden. Das heißt, nachdem zunächst ermittelt wurde, welche Funktionen aktuell bedienbar sind, wird zudem bestimmt, welche Arten von Bedienung möglich sind und auf welche Weisen, das heißt mittels welcher Bedienmodalitäten und/oder mittels welcher Bedienhandlungstypen, diese Bedienung vorgenommen werden kann. Zum Beispiel können in einer aktuellen Bediensituation und einem Zustand der bedienbaren Funktion bestimmte Gesten, Sprachbefehle oder andere Typen von Bedienhandlungen verwendbar sein, während andere Arten der Eingabe aktuell nicht zur Bedienung verwendet werden können. Beispielsweise kann in einem bestimmten Zustand der bedienbaren Funktion ein vertikales Scrollen durchgeführt werden, aber keine seitliche Verschiebung oder umgekehrt. Dementsprechend sind bestimmte Befehle oder Bedienhandlungstypen in dieser Situation verwendbar oder nicht.

Bei einer Ausbildung des erfindungsgemäßen Verfahrens umfasst ein potentieller Bedienhandlungstyp eine Geste im dreidimensionalen Raum, eine Geste auf einer berührungsempfindlichen Oberfläche, eine Spracheingabe oder eine Bedienung eines Druck-, Schiebe- oder Drehschalters. Ein Bedienhandlungstyp kann ferner beispielsweise einen Tastendruck, eine Rotation oder eine andere Betätigung eines Bedienelements umfassen. Insbesondere sind die potentiellen Bedienhandlungstypen aus den genannten Arten der Bedienung ausgewählt. Dadurch kann ein Nutzer vorteilhafterweise besonders gut bei der Ausführung geeigneter Bedienhandlungen unterstützt werden.

Beispielsweise wird eine lautliche Äußerung mittels eines Mikrofons erfasst und die erfasste Äußerung wird einem bestimmten Sprachbefehl zugeordnet; dabei wird berücksichtigt, dass die tatsächlich erfasste Äußerung typischerweise nicht genau dem vorgegebenen, idealisierten Modell des Bedienhandlungstyps der bestimmten Spracheingabe entspricht, sondern dass es zu Abweichungen kommt, etwa durch Rauschen bei der Erfassung, Hintergrundlaute und eine inkonsistente Lauterzeugung beim Aussprechen des Sprachbefehls. In ähnlicher Weise kann etwa eine Geste in einem dreidimensionalen Raum erfasst und etwa einer Wischgeste in eine bestimmte Richtung zugeordnet werden, wobei ein Modell des entsprechenden Bedienhandlungstyps für eine tatsächlich erfasste Geste bestimmt wird.

Ferner sind insbesondere Bedienmodalitäten definiert, die eine Menge bestimmter Bedienhandlungstypen zusammenfassen, insbesondere durch gemeinsame Charakteristika der Erzeugung, Durchführung und/oder Erfassung der Bedienhandlungstypen einer Bedienmodalität. So kann eine Bedienmodalität "Spracheingabe" verschiedene Bedienhandlungstypen umfassen, insbesondere verschiedene einzelne Sprachbefehle. In einem weiteren Beispiel kann eine Bedienmodalität "Gestenbedienung" für den dreidimensionalen Raum verschiedene Gesten umfassen, etwa Wischgesten rechts und links, Wischgesten nach oben und unten, eine Bestätigungsgeste und/oder eine Zeige-und-Verschiebegeste, die etwa als Lautstärkegeste definiert sein kann. Weitere Bedienmodalitäten können zum Beispiel Gesten auf einer berührungsempfindlichen Oberfläche oder Betätigungen physischer Bedieneinrichtungen sein.

Bei der Erfindung werden zumindest zwei potentielle Bedienhandlungstypen für die bedienbare Funktion bestimmt und der erste oder der zweite potentielle Bedienhandlungstyp wird als bevorzugter Bedienhandlungstyp bestimmt. Mittels des Bedienobjekts der Ausgabe wird dann angezeigt, welches der bevorzugte Bedienhandlungstyp ist. Dadurch kann einem Nutzer vorteilhafterweise signalisiert werden, welcher Typ von Bedienhandlung aktuell besonders gut zur Bedienung geeignet ist.

Beispielsweise kann eine bedienbare Funktion mittels verschiedener Bedienhandlungstypen oder Bedienmodalitäten bedient werden, etwa mittels Spracheingabe, dreidimensionaler Geste und Bedienung mittels Gesten auf einem Touchscreen. Je nach der aktuellen Situation und/oder einem aktuellen Zustand der bedienbaren Funktion kann jedoch bestimmt werden, dass ein bestimmter Bedienhandlungstyp oder eine Bedienmodalität bevorzugt ist, etwa eine Spracheingabe oder eine Gestenbedienung, beispielsweise weil der Nutzer seine Hände anderweitig nutzt, weil ein Bedienelement oder ein Erfassungsraum besser oder schlechter für das Ausführen einer Geste erreichbar ist, weil Hintergrundgeräusche die Erfassung einer Spracheingabe stören oder aufgrund persönlicher Präferenzen des Nutzers.

Die Ausgabe umfasst bei der Erfindung ein Bedienobjekt, das heißt ein bedienbares Element, anhand dessen der bevorzugte Bedienhandlungstyp ausgebbar ist. Das Bedienobjekt kann beispielsweise als grafisches Element einer Anzeige auf einem Display ausgebildet sein, wobei es in diesem Fall einen Bereich einer Anzeigefläche des Displays definiert, in dem eine Betätigung zu einer Bedienung des Bedienobjekts führt. Die Betätigung kann beispielsweise durch Berühren eines Touchscreens mittels eines Betätigungsobjekts in dem Bereich des Bedienobjekts oder durch eine Betätigung mittels eines Zeigerinstruments, etwa eines durch eine Maus oder eine ähnliche Vorrichtung gesteuerten Cursors, erfolgen. Ferner kann in diesem Fall eine Betätigung mittels einer Geste erfolgen, wobei keine Berührung eines Touchscreens oder einer Eingabeeinrichtung erforderlich sein muss, etwa mittels einer Zeige- und Betätigungsgeste.

Das Bedienobjekt kann ferner eine physisch betätigbare Einrichtung umfassen, etwa einen Tastschalter, einen Regler oder eine andere Einrichtung. Es wird in diesem Fall bei der Ausgabe nicht als solches in seiner Darstellung verändert, sondern die Ausgabe findet beispielsweise im Bereich des Bedienobjekts statt.

Die Ausgabe des Bedienobjekts erfolgt bei dem Verfahren gemäß der Erfindung so, dass der bevorzugte Bedienhandlungstyp angezeigt wird. Das heißt insbesondere, der Nutzer kann erfassen, auf welche Weise er den bevorzugten Bedienhandlungstyp ausführen kann. Insbesondere ist dabei auch das Bedienobjekt an sich zur Ausführung einer Bedienhandlung betätigbar.

Beispielsweise ist für eine bedienbare Funktion als erste Bedienhandlungstyp eine Betätigung des Bedienobjekts vorgesehen, etwa durch Berühren eines Touchscreens im Bereich der Anzeige des Bedienobjekts, und als weiterer Bedienhandlungstyp kann eine Raumgeste im dreidimensionalen Raum ausgeführt werden. Wenn bei diesem Beispiel die Gestenbedienung bevorzugt ist, kann die Anzeige des Bedienobjekts etwa mit einer dynamischen Bewegung innerhalb der Anzeige so gebildet werden, dass dem Nutzer dadurch bereits ausgegeben wird, wie er die bevorzugte Bediengeste durchführen muss. Insbesondere erfolgt die Ausgabe so, dass dem Nutzer sowohl der erste als auch der zweite potentielle Bedienhandlungstyp angezeigt wird, wobei jedoch insbesondere der bevorzugte Bedienhandlungstyp hervorgehoben oder besonders deutlich angezeigt wird

Bei dem erfindungsgemäßen Verfahren sind die bestimmten potentiellen Bedienhandlungstypen verschiedenen Bedienmodalitäten zugeordnet, wobei eine bevorzugte Bedienmodalität bestimmt wird und der bevorzugte Bedienhandlungstyp anhand der bevorzugten Bedienmodalität bestimmt wird. Dadurch kann eine aktuelle Bediensituation vorteilhafterweise besonders einfach klassifiziert werde, um zu bestimmen, welcher Bedienhandlungstyp besonders gut geeignet ist.

Beispielsweise werden Parameter einer Situation erfasst, etwa ein Fahrmodus, ein psychischer oder physischer Zustand des Nutzers, insbesondere des Fahrers, eine Komplexität einer Verkehrssituation, oder eine Nutzereingabe, und anhand der erfassten Parameter werden stets Bedienhandlungstypen einer bestimmten, bevorzugten Bedienmodalität als bevorzugte Bedienhandlungstypen ausgegeben. Zum Beispiel werden in einer bestimmten Situation Bedienhandlungstypen einer Gestenbedienung bevorzugt, etwa bei einer zumindest teilweise automatischen Fahrzeugsteuerung.

Insbesondere sind als Bedienmodalitäten definiert: Raumgesten in einem dreidimensionalen Raum, Gesten auf einer zweidimensionalen Oberfläche, Betätigungen durch Berühren oder Drücken eines Betätigungselements, etwa eines Schalters oder Taster, Betätigungen mittels eines Zeigeelements, etwa eines Cursors, einer Maus, eines Joysticks, eines Dreh-Drück-Stellers oder eines Touchpads, oder Sprachbefehle. Bedienhandlungstypen sind dann beispielsweise spezifische Gesten oder Sprachbefehle zur Bedienung.

Zur Durchführung einer Geste kann beispielsweise ein Betätigungsobjekt verwendet werden, insbesondere eine Hand des Nutzers. In den folgenden Erläuterungen sind Angaben, die sich auf die Hand eines Nutzers als Betätigungsobjekt beziehen, auf andere Betätigungsobjekte, etwa einen Stift, zu verallgemeinern.

Unter einer "Geste" wird insbesondere eine bestimmte Position und Ausrichtung, das heißt eine Pose eines Betätigungsobjekts, etwa einer Hand eines Nutzers, oder eine bestimmte Bewegung, die mit dem Betätigungsobjekt ausgeführt wird, verstanden. Gesten können nach an sich bekannter Art ausgestaltet sein. Sie umfassen insbesondere Zeigegesten, Wischgesten und solche Gesten, die im alltäglichen Gebrauch verwendet werden, zum Beispiel Handdrehungen, Greifgesten und Kombinationen mehrerer solcher gegebenenfalls unmittelbar kurz nacheinander ausgeführter Gesten. Die Gesten werden in einem Erfassungsraum ausgeführt. Dieser kann in einem räumlichen Bezug zu einer bestimmten Einrichtung stehen, etwa eine Ausgabevorrichtung, und kann beispielsweise an diesen angrenzen. Eine Geste kann ferner eine Annäherung an eine bestimmte räumliche Position, etwa eine Einrichtung oder eine Position auf einer Anzeigefläche, umfassen. Durch eine Gestenbedienung wird dem Nutzer eine besonders einfache und intuitive Bedienmöglichkeit bereitgestellt.

Anhand einer Geste kann ferner eine Richtung im Raum ermittelt werden und in Abhängigkeit von der ermittelten Richtung kann insbesondere eine Position bestimmt werden, für die eine Zeigegeste bestimmt wird. Zum Beispiel kann der Nutzer auf einen Punkt in einem Anzeigebereich zeigen und dadurch eine Auswahl durchführen. Anschließend kann eine Auswahl eines grafischen Objekts visualisiert werden, wenn das grafische Objekt in einem vorbestimmten Umgebungsbereich um den berechneten Punkt liegt. Hierdurch kann das grafische Objekt durch Zeigen ausgewählt werden. Eine Visualisierung der Auswahl eines grafischen Objekts hat den Vorteil, dass der Nutzer unmittelbar eine Rückkopplung zu seiner Bedienaktion erhält. Dabei kann der Punkt im Anzeigebereich auch dann visualisiert werden, wenn noch kein Objekt in dem Umgebungsbereich um den Punkt identifiziert wurde. Dies vermeidet, dass der Nutzer zwischen den Objekten im Leeren suchen muss, bis er das gewünschte grafische Objekt getroffen hat. Dies kann das Auswahlverfahren weiter beschleunigen.

Die Erfassung einer Geste kann etwa berührungslos durch ein Kamerasystem erfolgen, welches zeitlich aufgelöste Videodaten aus dem Detektionsraum aufnimmt und mittels einer angeschlossenen Analyseeinheit die erfassten Nutzerbewegungen bestimmten Gesten zuordnet. Alternativ oder auch zusätzlich kann eine Geste mittels resistiver und/oder kapazitiver Flächen erfasst werden.

Bei einer weiteren Ausbildung umfasst die Ausgabe, wenn der bevorzugte Bedienhandlungstyp eine Raumgeste umfasst, ein bewegtes Objekt, das eine Bewegung entsprechend einer Richtung der Raumgeste aufweist. So wird vorteilhafterweise eine Geste als bevorzugter Bedienhandlungstyp besonders leicht erfassbar ausgegeben und kann vom Nutzer schnell und intuitiv erlernt werden. Die Bewegung kann in der Ausgabe insbesondere perspektivisch dargestellt sein.

Beispielsweise können die potentiellen Bedienhandlungstypen bestimmte Gesten und eine Steuerung mittels Berührungen eines Touchscreens umfassen. Das Bedienobjekt kann dann als bewegtes Objekt ausgebildet sein, dessen Bewegungsrichtung oder -ablauf einer Bewegung des potentiellen Bedienhandlungstyps entspricht. Das heißt, der Nutzer muss den angezeigten Bewegungsablauf mit einem Betätigungsobjekt wie seiner Hand nachvollziehen. Gleichzeitig kann in dem Beispiel das dargestellte Bedienobjekt selbst betätigbar ausgebildet und beispielsweise mittels einer Berührung bedienbar sein.

Bei einer Weiterbildung umfasst die Ausgabe, wenn der bevorzugte Bedienhandlungstyp eine Raumgeste umfasst, eine schematische grafische Darstellung einer Hand. Dadurch kann ein Nutzer vorteilhafterweise eine Eingabemöglichkeit mittels einer Geste seiner Hand besonders gut erfassen.

Die Ausgabe, insbesondere mit einem Hinweis auf die Ausführung einer Geste im dreidimensionalen Raum, kann beispielsweise eine grafische Darstellung eines Betätigungsobjekts umfassen, etwa einer menschlichen Hand. Die Darstellung ist insbesondere schematisch ausgebildet, wobei beispielsweise lediglich Umrisse des Betätigungsobjekts angezeigt werden. Die grafische Darstellung kann auf einer Anzeigefläche einer Anzeigeeinheit ausgegeben werden, beispielsweise überlagernd zusätzlich zu einer weiteren Anzeige. Insbesondere kann auf der Anzeigefläche eine Anzeige mit einer Bedienoberfläche erzeugt werden, die von der grafischen Darstellung der Bedienhandlung mittels des Betätigungsobjekts überlagert wird. Zudem kann zusätzlich zu einer dreidimensionalen Geste als Bedienhandlungstyp auch eine Berührung oder Geste auf einer berührungsempfindlichen Oberfläche und/oder ein Sprachbefehl als potentieller Bedienhandlungstyp vorgesehen sein. Insbesondere wird eine schematische Handdarstellung so erzeugt, dass sie die Größe einer tatsächlichen Hand aufweist und eine Projektion der Anordnung einer Hand relativ zur Ausgabefläche bei einer Raumgeste anzeigt.

Bei einer Ausbildung umfasst die Ausgabe, wenn der erste, bevorzugte Bedienhandlungstyp einen Sprachbefehl umfasst, eine Textdarstellung des Sprachbefehls. Der Nutzer kann sich dabei vorteilhafterweise schnell entscheiden, ob er die Bedienung mittels des Sprachbefehls oder mittels eines anderen Bedienhandlungstyps ausführen will. Alternativ oder zusätzlich kann die Ausgabe einen akustisch wahrnehmbaren Hinweis auf den Sprachbefehl umfassen.

Bei einer weiteren Ausbildung ist bei dem Verfahren zudem eine Bedienhistorie für potentielle Bedienhandlungstypen vorgesehen und der bevorzugte Bedienhandlungstyp wird ferner anhand der Bedienhistorie erzeugt.

Die Bedienhistorie umfasst Informationen über eine Benutzungshäufigkeit und/oder eine Ausführungsqualität eines potentiellen Bedienhandlungstyps. Dadurch kann vorteilhafterweise die konkrete Benutzung eines bestimmten Bedienhandlungstyps besonders gut bewertet werden.

Die Bedienhistorie umfasst etwa gespeicherte Daten über die Nutzung von Bedienhandlungen eines bestimmten Bedienhandlungstyps, gegebenenfalls im Zusammenhang mit einer bedienbaren Funktion, insbesondere betreffend die Häufigkeit der Nutzung, wenn der Bedienhandlungstyp bevorzugt ist, und/oder eine bei der Nutzung bestimmte Erkennungssicherheit bei der Ausführung. Die Bedienhistorie umfasst beispielsweise eine Information darüber, wie oft eine Eingabe mittels einer Bedienhandlung eines bestimmten Bedienhandlungstyp für eine bedienbare Funktion durchgeführt wurde. Sie umfasst ferner zum Beispiel, wie häufig ein Bedienhandlungstyp verwendet wird, wenn dieser Bedienhandlungstyp als bevorzugter Bedienhandlungstyp bestimmt wurde.

Insbesondere wird eine Nutzeridentifikation eines Nutzers erfasst und die Bedienhistorie wird für einen potentiellen Bedienhandlungstyp für den identifizierten Nutzer erfasst. Dadurch kann vorteilhafterweise die Benutzung eines Bedienhandlungstyps für einen spezifischen Nutzer verbessert werden.

Die Nutzeridentifikation wird auf an sich bekannte Weise erfasst. Beispielsweise kann ein persönlicher Gegenstand, etwa ein mobiles Nutzergerät, ein Fahrzeugschlüssel, eine Identifikationskarte oder andere -vorrichtung, eine Nutzereingabe oder ein optisches Nutzeridentifikationsverfahren genutzt werden.

Die Bedienhistorie wird insbesondere für einen identifizierten Nutzer erzeugt, sodass vorteilhafterweise die Fähigkeiten und/oder Gewohnheiten des Nutzers beurteilt werden können. So kann anhand der Bedienhistorie beispielsweise bestimmt werden, ob und/oder wie oft ein Nutzer Bedienhandlungen eines bestimmten Typs ausführt, wenn diese für eine Eingabe oder zum Aufrufen einer Funktion zur Verfügung steht, und wie oft er statt des Bedienhandlungstyps eine Bedienhandlung eines anderen Typs verwendet, insbesondere eines nicht bevorzugten Bedienhandlungstyps. Die Bedienhistorie kann beispielsweise auf einem mobilen Nutzergerät gespeichert oder anhand der Nutzeridentifikation abgerufen werden, etwa durch Zugriff auf eine externe Speichereinheit wie einen Server oder eine interne Speichereinheit, etwa eines Fahrzeugs.

Ferner kann bestimmt werden, auf welche Weise ein Nutzer eine Bedienhandlung ausführt; beispielsweise kann die Sicherheit bestimmt werden, mit der eine Bedienhandlung eines Typs erkannt wird, und/oder es kann eine Ausführungsqualität für eine Bedienhandlung bestimmt werden. Beispielsweise kann bei einer Geste bestimmt werden, mit welcher Sicherheit oder Konfidenz die Geste einem bestimmten Bedienhandlungstyp zugeordnet werden kann, insbesondere um die Bedienhandlung von anderen Bedienhandlungstypen abzugrenzen. Ferner kann ein Ausführungsparameter bestimmt werden, etwa eine Deutlichkeit, eine Geschwindigkeit oder ein Ausführungsraum.

Wenn der Bedienhandlungstyp eine im Raum durchgeführte Geste umfasst, kann beispielsweise bestimmt werden, in welchem Erfassungsbereich im Raum die Geste durchgeführt wurde, wie deutlich beispielsweise eine Bewegung oder Pose eines Betätigungsobjekts ausgeprägt ist, mit welcher Amplitude oder Geschwindigkeit eine Bewegung durchgeführt wird oder für welchen Zeitraum eine bestimmte Pose gehalten wird. Ferner können verschiedene Spracheingaben als Bedienhandlungstypen zur Verfügung stehen. Die Bedienhistorie kann dann umfassen, wie deutlich eine Spracheingabe erkannt wurde und/oder mit welcher Eingabequalität die Spracheingabe erfasst wurde, etwa in Abhängigkeit von einer Lautstärke, einer Sprechrichtung, einer Sprechgeschwindigkeit, einer Betonung oder Sprachartikulation. Der Hinweis auf die Ausführung des potentiellen Bedienhandlungstyps kann dann so erzeugt werden, dass der Nutzer der Ausgabe entnimmt, wie der potentielle Bedienhandlungstyp besser ausgeführt werden kann.

Beispielsweise wird eine Bedienhandlung erfasst, einem Bedienhandlungstyp zugeordnet und anhand der erfassten Bedienhandlung wird die Bedienhistorie für den Bedienhandlungstyp aktualisiert. Die Bedienhistorie kann ferner auch dann aktualisiert werden, wenn erfasst wird, dass ein Nutzer keine Bedienhandlungen eines potentiellen Bedienhandlungstyps durchführt, insbesondere wenn es sich dabei um einen bevorzugten Bedienhandlungstyp handelt. Dadurch wird die Bedienhistorie vorteilhafterweise stets aktuell gehalten und die Ausgabe kann an die Bedürfnisse des Nutzers angepasst werden.

Die Bedienhistorie kann in diesem Fall beispielsweise um zusätzliche Informationen ergänzt werden oder vorhandene Informationen können durch aktualisierte Informationen aktualisiert werden. Beispielsweise kann die Häufigkeit, mit welcher der Bedienhandlungstyp von dem Nutzer genutzt wird, aktualisiert werden. Ferner können Informationen darüber ergänzt oder aktualisiert werden, welche die Ausführungsqualität der Bedienhandlungen betreffen; beispielsweise kann sich die Qualität und/oder Deutlichkeit, mit der ein Nutzer Bedienhandlungen eines bestimmten Typs durchführt, verbessern und dies kann erfasst und in der Bedienhistorie gespeichert werden.

Bei einer Ausbildung umfasst die Bedienhistorie einen vorgegebenen Zeitraum oder eine vorgegebene Anzahl von Bedienhandlungen eines Nutzers oder für eine bestimmte bedienbare Funktion. Die Bedienhistorie kann ferner einen variablen Zeitraum umfassen, wobei für das Verfahren zunächst bestimmt wird, welcher Umfang der Bedienhistorie berücksichtigt werden soll. Zum Beispiel kann die Bedienhistorie für einen kürzeren Zeitraum berücksichtigt werden, wenn ein Nutzer die Bedienung neu lernt, da hier mit größeren Veränderungen im Bedienverhalten zu rechnen ist. Dagegen kann nach einer längeren Dauer, in der sich der Nutzer mit dem Bediensystem vertraut gemacht hat, ein längerer Zeitraum der Bedienhistorie berücksichtigt werden, um die Ausgabe anhand einer größeren Datenbasis zu erzeugen und dem Nutzer gezieltere Unterstützung zu bieten.

Anhand der Bedienhistorie können beispielsweise Bedienhandlungstypen als bevorzugt bestimmt werden, die ein Nutzer besonders häufig oder gut erkennbar ausführt. Umgekehrt können solche Bedienhandlungstypen nicht als bevorzugt bestimmt werden, die ein Nutzer selten oder schlecht erkennbar durchführt.

Ferner kann erfasst werden, dass der Nutzer eine Bedienhandlung durchführt, die keinem potentiellen Bedienhandlungstyp zugeordnet werden kann, etwa weil der Nutzer einen aktuell nicht zur Verfügung stehenden Typ von Bedienhandlung verwendet, oder weil die Bedienhandlung keinem bekannten Bedienhandlungstyp zugeordnet werden kann. Beispielsweise führt der Nutzer eine Wischgeste durch, obwohl aktuell keine entsprechende Eingabe möglich ist, oder er führt eine Geste undeutlich aus, etwa zu kleinräumig, schnell oder ungenau. Es kann dann erkannt werden, dass der Nutzer eine Eingabe vornehmen will, dass er aber anscheinend nicht weiß, welche Bedienhandlungstypen zur Verfügung stehen und/oder wie potentielle Bedienhandlungen korrekt auszuführen sind.

Bei einer Weiterbildung wird ferner eine Bedienhandlung erfasst, die keinem potentiellen Bedienhandlungstyp zuordenbar ist, und anhand der bedienbaren Funktion und der erfassten Bedienhandlung wird eine Intentionshypothese bestimmt. Die Ausgabe wird anhand der Intentionshypothese erzeugt. Dadurch kann einem Nutzer vorteilhafterweise eine besser geeignete Bedienmöglichkeit vorgeschlagen werden. Es wird insbesondere erkannt, welchen Bedienhandlungstyp der Nutzer wahrscheinlich verwenden wollte.

Die Ausgabe kann dann beispielsweise einen Hinweis darauf umfassen, wie der potentielle Bedienhandlungstyp gemäß der Intentionshypothese ausgeführt werden soll. Ferner kann die Ausgabe erzeugt werden, um dem Nutzer anzuzeigen, welche potentiellen Bedienhandlungstypen aktuell durchgeführt werden können und welches der bevorzugte Bedienhandlungstyp ist.

Beim Bestimmen der Intentionshypothese können etwa Wahrscheinlichkeiten für verschiedene potentielle Bedienhandlungstypen bestimmt und verglichen werden und der Bedienhandlungstyp mit der höchsten Wahrscheinlichkeit kann als Intentionshypothese verwendet werden. Die Wahrscheinlichkeiten können etwa anhand einer Ähnlichkeit zu der tatsächlich erfassten Bedienhandlung bestimmt werden; in diesem Fall kann beispielsweise ein Bedienhandlungstyp erkannt werden, selbst wenn die Bedienhandlung nicht ausreichend deutlich durchgeführt wurde. Ferner kann die Bedienhistorie verwendet werden, um eine Bedienhandlung zu bestimmen, die der Nutzer für die bedienbare Funktion besonders häufig verwendet. In einer Kombination kann zudem mittels einer Gewichtung sowohl bestimmt werden, welche Bedienhandlungstypen gemäß der Bedienhistorie für die bedienbare Funktion besonders häufig verwendet werden und welchem dieser Bedienhandlungstypen die tatsächlich erfasste Bedienhandlung besonders ähnlich ist. Ferner kann berücksichtigt werden, welche potentiellen Bedienhandlungstypen zur Verfügung stehen und es kann der wahrscheinlichste dieser Bedienhandlungstypen als Intentionshypothese gewählt werden. Insbesondere kann der Nutzer aufgefordert werden, zu bestätigen, dass es sich bei der Intentionshypothese um den tatsächlich intendierten Bedienhandlungstyp handelt.

Bei einer weiteren Ausbildung wird eine Nutzerposition relativ zu einer Eingabevorrichtung erfasst und der bevorzugte Bedienhandlungstyp umfasst in Abhängigkeit von der Nutzerposition eine Betätigung der Eingabevorrichtung oder eine Raumgeste. Dadurch können bevorzugte Bedienhandlungstypen und/oder Bedienmodalitäten vorteilhafterweise besonders leicht bestimmt werden.

Beispielsweise kann eine Sitzposition des Nutzers in einem Innenraum, etwa eines Fahrzeugs, erfasst werden. Befindet sich der Sitz in einer Stellung weit hinten in dem Innenraum, das heißt in großer räumlicher Entfernung von einer Eingabevorrichtung wie einem Touchscreen, so kann der bevorzugte Bedienhandlungstyp eine Raumgeste umfassen, während eine Bedienung mittels Betätigen beziehungsweise Berühren des Touchscreens oder eines anderen Bedienelements nicht bevorzugt ist. Dabei kann auch eine Reichweite des Nutzers erfasst werden, etwa eine Armlänge, oder es kann von einem vorgegebenen Wert der Reichweite ausgegangen werden, und eine Betätigung oder Berührung eines Touchscreens oder Bedienelements kann in dem Fall der bevorzugte Bedienhandlungstyp sein, wenn sich dieses innerhalb der Reihweite des Nutzers befindet.

Es kann ferner eine Ausrichtung des Nutzers in dem Innenraum, insbesondere relativ zu einer bestimmten ausgezeichneten Richtung, etwa einer Fahrtrichtung oder einer Richtung nach vorne oder hinten in Längsrichtung eines Fahrzeugs erfasst und beim Bestimmen des bevorzugten Bedienhandlungstyps berücksichtigt werden. Beispielsweise kann eine Blickrichtung oder eine Ausrichtung eines Sitzes bestimmt werden. In Abhängigkeit von der Ausrichtung des Nutzers kann dann ein bevorzugter Bedienhandlungstyp bestimmt werden. Zum Beispiel kann auf diese Weise bestimmt werden, ob ein bestimmtes Bedienelement in einer für den Nutzer ergonomisch erreichbaren Richtung angeordnet ist, etwa in einem Bereich vor dem Nutzer statt hinter ihm.

Bei einer Ausbildung wird eine Auswahl-Bedienhandlung erfasst und anhand der erfassten Auswahl-Bedienhandlung wird eine bedienbare Einrichtung bestimmt. Die bedienbare Funktion wird anhand der bestimmten bedienbaren Einrichtung bestimmt. Insbesondere ist die Auswahl-Bedienhandlung als Zeigegeste ausgebildet. Dadurch kann die bedienbare Funktion vorteilhafterweise besonders einfach und gezielt ausgewählt werden.

Beispielsweise kann ein Nutzer mit einem Betätigungsobjekt, insbesondere mit einem Finger, auf eine Einrichtung im Fahrzeug zeigen, insbesondere mittels einer bestimmten Zeigepose, und diese wird dann zur Bedienung ausgewählt. Es werden solche Funktionen der Einrichtung als bedienbare Funktionen identifiziert, die in der aktuellen Situation durch eine Bedienhandlung bedient werden können. Beispielsweise kann durch Zeigen auf eine Schiebetür diese ausgewählt werden und als potentieller Bedienhandlungstyp kann eine Schiebe- oder Wischgeste bestimmt werden, durch die ein Türöffnen oder -schließen als bedienbare Funktion angesteuert werden kann. Analog dazu können beispielsweise Fenster, Klappen, Beleuchtungseinrichtungen und/oder Sitzverstellungen gesteuert werden.

Bei einer Weiterbildung wird die Ausgabe visuell, akustisch oder haptisch wahrnehmbar ausgegeben. Die Ausgabe kann dadurch vorteilhafterweise besonders leicht erfassbar und gut an die jeweilige Situation angepasst ausgegeben werden.

Das Ausgeben kann auf an sich bekannte Weise erfolgen, etwa mittels einer Anzeigefläche oder eines Lautsprechers. Ferner kann eine dreidimensional erscheinende Darstellung ausgegeben werden, etwa mittels einer holografischen oder autostereoskopischen Darstellung.

Auch die Ausgabe kann in Abhängigkeit von einer Ausrichtung des Nutzer in dem Innenraum erfolgen, insbesondere eine visuell wahrnehmbare Ausgabe mittels einer Ausgabevorrichtung im Sichtfeld des Nutzers.

Die Ausgabe erfolgt insbesondere auf an sich bekannte Weise. Beispielsweise kann eine visuell wahrnehmbare Ausgabe mittels eines Bildschirms ausgegeben werden, ferner können beleuchtbare Anzeigen, etwa mit hinterleuchteten Symbolen, verwendet werden. Eine akustisch wahrnehmbare Ausgabe kann etwa mittels eines Lautsprechers ausgegeben werden.

Die Ausgabe erfolgt insbesondere mittels einer Ausgabevorrichtung, die in Abhängigkeit von einer Bedienmodalität des bevorzugten Bedienhandlungstyps bestimmt wird. Beispielsweise erfolgt die Ausgabe auf visuell wahrnehmbare Weise, wenn der bevorzugte Bedienhandlungstyp ein Betätigen eines Touchscreens oder einer Bedienelements durch ein Berührung umfasst. Ferner erfolgt beispielweise die Ausgabe auf akustisch wahrnehmbare Weise, wenn der bevorzugte Bedienhandlungstyp einen Sprachbefehl umfasst. Bei einem weiteren Beispiel erfolgt die Ausgabe akustisch wahrnehmbar, wenn bestimmt wird, dass sich eine Ausgabevorrichtung zur visuell wahrnehmbaren Ausgabe nicht im Blickfeld des Nutzers befindet, etwa weil dieser in eine andere Richtung blickt oder sein Sitz so ausgerichtet ist, dass der Blick des darauf sitzenden Nutzers von der Ausgabevorrichtung abgewandt ist.

Das erfindungsgemäße Bediensystem zum Erfassen einer Nutzereingabe für eine Einrichtung eines Fahrzeugs umfasst eine Steuereinheit sowie eine Ausgabeeinheit, die mit der Steuereinheit gekoppelt ist. Dabei ist die Steuereinheit dazu eingerichtet, eine bedienbare Funktion des Bediensystems zu erfassen, in Abhängigkeit von der bedienbaren Funktion einen ersten und einen zweiten potentiellen Bedienhandlungstyp für die bedienbare Funktion zu bestimmen und einen bevorzugten Bedienhandlungstyp zu bestimmen. Dabei ist die Steuereinheit ferner dazu eingerichtet, in Abhängigkeit von dem bevorzugten Bedienhandlungstyp eine Ausgabe zu erzeugen und mittels der Ausgabeeinheit auszugeben.

Dabei umfasst die Ausgabe ein Bedienobjekt, anhand dessen einem Nutzer der bevorzugte Bedienhandlungstyp angezeigt wird. Erfindungsgemäß sind die bestimmten potentiellen Bedienhandlungstypen verschiedenen Bedienmodalitäten zugeordnet und die Steuereinheit ist dazu eingerichtet, eine bevorzugte Bedienmodalität zu bestimmen und den bevorzugten Bedienhandlungstyp anhand der bevorzugten Bedienmodalität zu bestimmen.

Das erfindungsgemäße Bediensystem ist insbesondere ausgebildet, das vorstehend beschriebene erfindungsgemäße Verfahren zu implementieren. Es weist somit dieselben Vorteile auf wie das erfindungsgemäße Verfahren.

Die Ausgabeeinheit kann auf verschiedene Weise ausgebildet sein. Sie kann beispielsweise eine Anzeigefläche umfassen, auf der bei der Ausgabe eine grafische Darstellung ausgebbar ist. Sie kann ferner eine Vorrichtung zur Ausgabe von akustisch erfassbaren Ausgaben umfassen, insbesondere von Sprachausgaben. Die Ausgabeeinheit kann ferner dazu geeignet sein, eine Ausgabe mit einer dreidimensionalen Darstellung zu erzeugen, etwa als holografische oder autostereoskopische Ausgabe.

Eine Ausbildung des erfindungsgemäßen Bediensystems umfasst eine Identifikationsvorrichtung, die dazu eingerichtet ist, eine Nutzeridentifikation eines Nutzers zu erfassen. Dabei ist die Steuereinheit ferner dazu eingerichtet, die Bedienhistorie für den potentiellen Bedienhandlungstyp für den identifizierten Nutzer zu erfassen. Dadurch kann die Ausgabe vorteilhafterweise besonders gezielt an die Bedürfnisse des jeweiligen Nutzers angepasst werden.

Eine Ausbildung des erfindungsgemäßen Bediensystems umfasst ferner eine Erfassungseinheit zum Erfassen einer Bedienhandlung, insbesondere mit einer Kamera zum Erfassen einer Geste in einem Erfassungsbereich, einer berührungsempfindlichen Oberfläche und/oder einer Spracherfassungseinheit. Dadurch können vorteilhafterweise verschiedene Bedienhandlungstypen einfach für die Steuerung des Bediensystems erfasst werden.

Das erfindungsgemäße Fahrzeug umfasst ein erfindungsgemäßes Bediensystem.

Die Erfindung wird nun anhand von Ausführungsbeispielen mit Bezug zu den Zeichnungen erläutert.
- Figur 1: zeigt ein Fahrzeug mit einem Ausführungsbeispiel des erfindungsgemäßen Bediensystems,
- Figur 2: zeigt ein Ausführungsbeispiel des erfindungsgemäßen Verfahrens,
- Figur 3: zeigt ein Ausführungsbeispiel einer bei dem erfindungsgemäßen Verfahren erzeugten Ausgabe mit einem Hinweis auf die Durchführung einer Bediengeste,
- Figur 4: zeigt ein Ausführungsbeispiel einer bei dem erfindungsgemäßen Verfahren erzeugten Ausgabe mit Hinweisen auf verschiedene Richtungen,
- Figur 5: zeigt ein Ausführungsbeispiel einer bei dem erfindungsgemäßen Verfahren erzeugten Ausgabe mit einem Popup zur Lautstärkeregelung,
- Figuren 6A und 6B: zeigen Ausführungsbeispiele von bei dem erfindungsgemäßen Verfahren erzeugten Ausgaben mit Hinweisen zur Ausführung von Bediengesten,
- Figur 7: zeigt ein Ausführungsbeispiel einer bei dem erfindungsgemäßen Verfahren erzeugten Ausgabe mit einem Popup zum Steuern einer Beleuchtungseinrichtung und
- Figuren 8A bis 8D: zeigen ein Ausführungsbeispiel einer bei dem Verfahren erzeugten Ausgabe und ihre Bedienung in verschiedenen Bedienmodi.

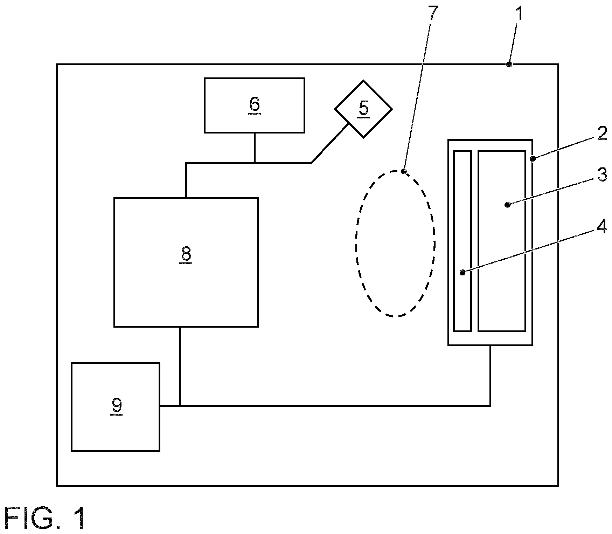

Mit Bezug zu Figur 1 wird ein Fahrzeug mit einem Ausführungsbeispiel des erfindungsgemäßen Bediensystems erläutert.

Das Fahrzeug 1 umfasst einen Touchscreen 2, der auf an sich bekannte Weise ausgebildet ist und eine Anzeigeeinheit 3 sowie eine darüber angeordnete berührungsempfindliche Oberfläche 4 umfasst. Das Fahrzeug 1 umfasst ferner eine Erfassungseinheit 5, die als Kamera 5 ausgebildet ist und durch die in einem Erfassungsbereich 7 im Innenraum des Fahrzeugs 1 Gesten erfassbar sind, und eine als Lautsprecher 6 ausgebildete Ausgabeeinheit 6. Der Touchscreen 2, die Kamera 5 und der Lautsprechern 6 sind mit einer Steuereinheit 8 gekoppelt, mit der auch eine Multimediaeinheit 9 gekoppelt ist.

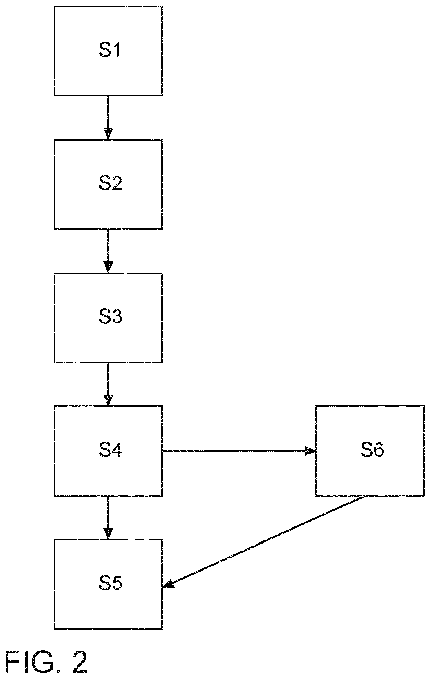

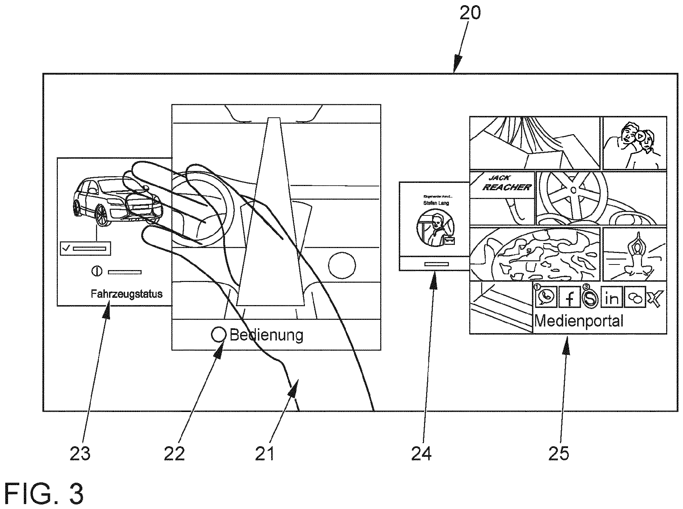

Mit Bezug zu den Figuren 2 und 3 wird ein Ausführungsbeispiel des erfindungsgemäßen Verfahrens und eine dabei erzeugte Ausgabe mit einem Hinweis auf die Durchführung einer Bediengeste erläutert. Dabei wird von dem oben mit Bezug zu Figur 1 erläuterten Ausführungsbeispiel des erfindungsgemäßen Bediensystems ausgegangen, welches durch die Beschreibung des Verfahrens weiter spezifiziert wird.

In einem Schritt S1 wird erfasst, welche Funktionen aktuell bedienbar sind. Hierzu wird bestimmt, welche Einrichtungen aktuell durch die Steuereinheit 8 angesteuert werden können und sich in einem Zustand befinden, in dem Eingaben eines Nutzers verarbeitet werden können. Bei dem Ausführungsbeispiel sind Funktionen der Multimediaeinheit 9 bedienbar, beispielsweise Funktionen zur Ausgabe von audiovisuellen Inhalten, Texten und Bildern, zur Steuerung eines Navigationsgeräts, zum Zugriff auf weitere Einrichtungen des Fahrzeugs 1 oder zum Steuern einer Telekommunikationseinrichtung, etwa eines Telefons. Dabei kann ein Nutzer auch durch hierarchisch geordnete Datenbestände, etwa Musiktitel oder Adressdaten, oder Menüstrukturen navigieren. Bei weiteren Ausführungsbeispielen können alternativ oder zusätzlich andere Funktionen und/oder Einrichtungen des Fahrzeugs 1 bedienbar sein.

In diesem Schritt S1 wird beim Ausführungsbeispiel ferner die Identität des Nutzers erfasst. Dies erfolgt bei dem Ausführungsbeispiel anhand eines mobilen Geräts, das dem Nutzer zugeordnet ist, insbesondere einem Fahrzeugschlüssel. Bei weiteren Ausführungsbeispielen kann die Identifikation anhand eines Mobiltelefons erfolgen, dessen Position im Bereich eines bestimmten Fahrzeugsitzes, etwa des Fahrersitzes, im Fahrzeug 1 bestimmt wird und das einem bestimmten Nutzer zugeordnet ist. Die Identifikation kann ferner anhand einer Eingabe des Nutzers erfolgen, der sich beispielsweise durch eine Eingabe mittels des Touchscreens 2 über einen Login anmeldet.

In Abhängigkeit von den bedienbaren Funktionen werden in einem weiteren Schritt S2 potentielle Bedienhandlungstypen bestimmt, das heißt, es wird ermittelt, welche Arten von Bedienhandlungen ein Nutzer durchführen kann, um bestimmte Eingaben zur Bedienung der bedienbaren Funktionen vorzunehmen. Bei dem Ausführungsbeispiel werden zunächst verschiedene Bedienmodalitäten bestimmt, etwa dreidimensionale Gesten im Erfassungsbereich 7, Gesten auf der berührungsempfindlichen Oberfläche 4, Sprachbefehle und/oder Betätigungen physischer Bedienelemente wie Tast-, Druck- und Drehschalter, Schiebe und Drehregler oder Knöpfe.

In einem weiteren Schritt S3 werden bevorzugte Bedienhandlungstypen bestimmt, wobei bei dem Ausführungsbeispiel die Bedienhandlungstypen einer bestimmten bevorzugten Bedienhandlungstypen einer bevorzugten Bedienmodalität als bevorzugt bestimmt werden. Das heißt, es wird bestimmt, welche Bedienhandlungstypen in der aktuellen Situation oder für bestimmte bedienbare Funktionen besonders gut geeignet sind.

Bei dem Ausführungsbeispiel wird hierzu die Position eines Fahrzeugsitzes bestimmt, auf dem sich ein Nutzer befindet. Hierzu kann zunächst bestimmt werden, auf welchem Fahrzeugsitz sich der Nutzer tatsächlich befindet, etwa mittels einer Sitzmatte oder einer Detektionseinrichtung, ferner kann ein bestimmter Fahrzeugsitz dem Bediensystem oder einer bestimmten bedienbaren Einrichtung 9 des Fahrzeugs 1 zugeordnet sein. Bei dem Ausführungsbeispiel wird davon ausgegangen, dass der Fahrer des Fahrzeugs 1 als Nutzer angesehen wird und sich auf dem Fahrersitz befindet. Bestimmten Positionen des Fahrzeugsitzes können verschiedene Bedienmodalitäten als bevorzugt zugeordnet sein. Befindet sich beispielsweise der Fahrersitz, etwa bei einer automatischen Fahrt, in einer nach hinten verfahrenen Position, von der aus Bedienelemente am Armaturenbrett des Fahrzeugs 1 weit entfernt sind, so können Bedienmodalitäten als bevorzugt bestimmt werden, die keine Betätigung von am Armaturenbrett angeordneten Bedienelementen erfordern; zum Beispiel kann in diesem Fall eine Steuerung mittels Sprachbefehlen oder dreidimensionalen Gesten bevorzugt sein.

Alternativ oder zusätzlich kann bei einem weiteren Ausführungsbeispiel bestimmt werden, welche Bedienhandlungstypen für bestimmte Eingaben einen minimalen physischen Aufwand erfordern oder eine möglichst schnelle Bedienung erlauben. Zum Beispiel kann ein Scrollen durch eine Liste mehrere Betätigungen eines physischen oder virtuell dargestellten Tasters erfordern, während eine analoge Bedienung mittels einer Wischgeste entlang der berührungsempfindlichen Oberfläche 4 oder im Erfassungsbereich 7 wesentlich schneller und mit geringerem Aufwand durchgeführt werden kann. Bei einem weiteren Beispiel kann ein Springen zu einem bestimmten Eintrag einer Liste mittels eines Sprachbefehls besonders schnell erfolgen, während die Eingabe des Eintrags mittels einer Tastatur mehrere Betätigungen erfordert.

Bei weiteren Ausführungsbeispielen können alternativ oder zusätzlich andere Parameter genutzt werden, um bevorzugte Bedienhandlungstypen oder Bedienmodalitäten zu bestimmen, etwa ein manueller oder zumindest teilweise automatischer Fahrmodus, ein befahrener Straßentyp, eine geographische Umgebung oder Einstellungen, Eingaben und Präferenzen für den identifizierten Nutzer oder Fahrer des Fahrzeugs 1.

In einem weiteren Schritt S4 wird eine Bedienhistorie für den identifizierten Nutzer erfasst. Die Bedienhistorie umfasst bei dem Ausführungsbeispiel Informationen darüber, mittels Bedienhandlungen welcher Bedienhandlungstypen der Nutzer in der Vergangenheit Eingaben für bestimmte bedienbare Funktionen vorgenommen hat. Sie umfasst ferner Informationen darüber, auf welche Weise der Nutzer die Bedienhandlungen ausgeführt hat, beispielsweise wie gut die Eingaben anhand der Bedienhandlungen bestimmter Bedienhandlungstypen erkannt wurden und inwiefern eine veränderte Durchführung der Bedienhandlungen die Erkennbarkeit verbessern würde. Das heißt, die Bedienhistorie umfasst Informationen darüber, ob der Nutzer in der Vergangenheit Bedienhandlungen bestimmter Bedienhandlungstypen verwendet hat, um bestimmte Eingaben vorzunehmen, und wie er diese Bedienhandlungen ausgeführt hat.

Zum Beispiel hat der Nutzer in der Vergangenheit Bedienhandlungen eines bestimmten Bedienhandlungstyps ungenau ausgeführt, etwa indem er eine Wischgeste im dreidimensionalen Raum mit zu hoher Geschwindigkeit, über eine zu geringe Strecke und/oder nicht ausreichend geradlinig durchgeführt hat. Dies führte in der Vergangenheit dazu, dass die Erkennung der Wischgeste mit einer geringen Konfidenz erfolgte, wobei beispielsweise die Amplitude der Wischgeste oder ihre Richtung mit nur geringer Genauigkeit bestimmt werden konnte. Bei einem weiteren Beispiel hat der Nutzer in der Vergangenheit einen Sprachbefehl undeutlich, zu leise oder zu schnell ausgesprochen. Bei einem weiteren Beispiel hat der Nutzer beim Betätigen eines virtuellen Bedienelements auf dem Touchscreen 2 einen Bereich am Rand des Bedienelements berührt, sodass die Eingabe nicht klar von der Betätigung eines benachbarten Bedienelements abgegrenzt werden konnte.

Bei dem Ausführungsbeispiel wird die Bedienhistorie so erfasst, dass diese eine vorgegebene Anzahl von Eingaben des Benutzers umfasst. Bei weiteren Ausführungsbeispielen kann eine bestimmte Zeitdauer vorgegeben sein oder die Anzahl der berücksichtigten Bedienhandlungen in der Vergangenheit kann während der Ausführung des Verfahrens variabel bestimmt werden.

Wenn anhand der erfassten Bedienhistorie bestimmt wird, dass der Nutzer zur Bedienung normalerweise einen bevorzugten Bedienhandlungstyps verwendet und die entsprechende Bedienhandlung gut erkennbar ausführt, so wird in einem weiteren Schritt S5 eine Bedienhandlung erfasst, ein entsprechendes Steuersignal erzeugt und die Einrichtung eines Fahrzeugs 1 angesteuert.

Wird dagegen bestimmt, dass der Nutzer den bevorzugten Bedienhandlungstyps selten oder niemals verwendet hat oder dass der Nutzer Bedienhandlung des bevorzugten Bedienhandlungstyps nicht optimal ausführt, so wird in einem Schritt S6 eine Ausgabe mit einem Hinweis auf die Ausführung des potentiellen Bedienhandlungstyps erzeugt und ausgegeben.

Dem Nutzer soll verdeutlicht werden, dass er etwa potentielle Gesten gar nicht oder falsch ausführt oder dass er die Bedienung mit weniger physischem Aufwand ausführen könnte. Die Ausgabe wird nun individuell in der jeweiligen Situation so erzeugt, dass auf einen vom Nutzer nicht ausgeführten, falsch ausgeführten oder nicht optimal ausgeführten Bedienhandlungstyp, etwa eine bestimmte Geste, hingewiesen wird.

Bei dem Beispiel wird dem Nutzer bei Nichtnutzung bestimmter Gesten an bestimmten Stellen der Bedienung einer Mensch-Maschine-Schnittstelle an diesen Stellen beispielsweise eine schematische Hand angezeigt, welche die Ausführung des noch ungenutzten Gestentyps darstellt. Bei falscher oder nicht optimaler Ausführung der Geste eines bestimmten Gestentyps wird die intendierte Geste erkannt und es wird ebenfalls eine schematische Hand angezeigt, welche die korrekte oder sparsamere Gestenausführung in Bewegung anzeigt.

Bei weiteren Beispielen erfolgt wird die korrekte Gestenausführung auf andere Art dargestellt. So kann zum Beispiel mit Hilfe holografischer oder autostereoskopischer Anzeigen eine dreidimensionale Hand im Raum vor einem Display oder in einem anderen Erfassungsbereich die korrekte Gestenbewegung angezeigt werden. Eine mögliche Erweiterung des Verfahrens besteht darin, neben der visuellen Anzeige die visuellen Ratschläge um eine Sprachausgabe zu ergänzen. So kann auf in einer bestimmten Bediensituation nie ausgeführten Gesten, die der Nutzer aber an anderer Stelle korrekt ausführt und kennt, per Sprachausgabe ein Hinweis ausgegeben werden; etwa "Du kannst hier auch eine Swipe-Geste ausführen". Bei falscher oder nicht optimaler Gestenausführung kann ein sprachlicher Hinweise zur Ausführung und Verbesserung ausgegeben werden; etwa "Du musst die Geste am Ende ganz kurz halten" oder "Du brauchst den Arm nicht so weit zu bewegen". Dadurch kann gezielter auf das Problem der Ausführung eines Bedienhandlungstyps eingegangen und eine natürliche Interaktion wie mit einem natürlichen Gegenüber imitiert werden.

Ferner kann beim Erfassen der Identität des Nutzers, anhand eines Schlüssels oder anhand von biometrischen Eigenschaften, individuell auf die Gestenbedienung und -nutzung der verschiedenen Nutzer eingegangen werden. Das System erkennt etwa bereits beim Einstieg in das Fahrzeug anhand der Bedienhistorie, dass der Nutzer in bestimmten Bediensituationen eine bestimmte Geste nicht ausführt. Es kann auf diese Weise ferner erkannt werden, dass der Nutzer bereits in der Vergangenheit Probleme hatte, eine bestimmte Geste korrekt oder mit geringem physischem Aufwand auszuführen. Es kann dann für den Nutzer eine individuelle Unterstützung zur optimalen Gestenbedienung erreicht werden.

Figur 3 zeigt ein Beispiel einer Ausgabe mit einem Hinweis auf die Ausführung des potentiellen Bedienhandlungstyps. Bei dem dort beispielhaft dargestellten Fall ist der bevorzugte Bedienhandlungstypen eine Wischgeste im dreidimensionalen Raum, durch die verschiedene grafische Objekte 22 bis 25 innerhalb einer Bedienoberfläche 20 verschoben werden können, insbesondere um ein Element in den Vordergrund zu bringen, auszuwählen und anschließend weiter zu bedienen. Der Hinweis auf eine solche Wischgeste ist dabei als schematisch in Umrissen gezeigte Darstellung einer Hand 21 ausgebildet. Die Ausgabe ist dabei dynamisch gebildet, das heißt, die schematisch dargestellte Hand 21 wird in der Weise bewegt dargestellt, wie die Wischgeste im dreidimensionalen Raum ausgeführt werden soll. Bei der Bedienoberfläche 20 des Ausführungsbeispiels ist allerdings auch eine Bedienung auf andere Weise mittels nicht bevorzugter Bedienhandlungen möglich, etwa durch Betätigen von Pfeiltasten, durch eine Wischgeste entlang der berührungsempfindlichen Oberfläche 4, durch einen Sprachbefehl oder durch Betätigen eines physischen Bedienelements, etwa eines Dreh-Drück-Stellers.

Bei dem Ausführungsbeispiel wird die Ausgabe ferner in Abhängigkeit davon gebildet, wie der Nutzer seine Ausführung von Bedienhandlungen des bevorzugten Bedienhandlungstyps verbessern kann, das heißt, es werden diejenigen Aspekte der Ausführung besonders deutlich dargestellt, bei denen Verbesserungsbedarf besteht. Beispielsweise kann die Handhaltung während der Geste besonders deutlich dargestellt werden, ebenso die Geschwindigkeit oder die Amplitude der Bewegung, etwa über eine besonders lange Strecke.

Bei einem weiteren Ausführungsbeispiel erfolgt die Darstellung des Hinweises auf die Ausführung des potentiellen Bedienhandlungstyps durch Ausgabe eines schriftlichen Hinweises. Bei weiteren Ausführungsbeispielen kann die Ausgabe mittels einer holographischen oder autostereoskopischen Anzeige erfolgen, insbesondere um dreidimensionale Gesten darzustellen. Bei weiteren Ausführungsbeispielen kann die Ausgabe alternativ oder zusätzlich akustisch wahrnehmbar sein, etwa durch einen gesprochenen Hinweis auf die Ausführung des bevorzugten Bedienhandlungstyps. Insbesondere kann die Ausgabe mittels einer Ausgabemodalität erfolgen, die auf eine bevorzugte Bedienmodalität hinweist, etwa durch die Ausgabe eines akustisch wahrnehmbaren Hinweises auf die Bedienung mittels Sprachbefehlen oder durch Hervorheben eines betätigbaren physischen oder virtuell dargestellten Bedienelements, etwa durch eine Helligkeit, Farbe oder einen dynamischen Effekt wie Blinken.

Nach der Ausgabe kann bei einem weiteren Ausführungsbeispiel im Schritt S5 eine Bedienhandlung des Nutzers als Eingabe erfasst und ein entsprechendes Steuersignal erzeugt werden, um die Einrichtung 9 des Fahrzeugs 1 zu bedienen. Die Bedienung kann auch mittels einer Bedienhandlung eines nicht bevorzugten Bedienhandlungstyps erfolgen.

Anhand der erfassten Bedienhandlung wird die Bedienhistorie aktualisiert.

Bei einem weiteren Ausführungsbeispiel des erfindungsgemäßen Verfahrens wird eine Bedienhandlung eines Nutzers erfasst, etwa eine Geste in dem Erfassungsbereich 7 oder ein Sprachbefehl, wobei der Bedienhandlung jedoch keine aktuell zur Verfügung stehende Bedienung einer Einrichtung 9 des Fahrzeugs 1 zugeordnet wird. Dies kann dadurch bedingt sein, dass die Bedienhandlung nicht richtig erkannt und einem falschen Bedienhandlungstyps zugeordnet wurde oder dass der Nutzer eine Bedienhandlung eines nicht zur Verfügung stehenden Bedienhandlungstyps durchgeführt hat, etwa weil ihm nicht bewusst ist, welcher Bedienhandlungstypen aktuell zur Verfügung stehen oder wie diese auszuführen sind. Es wird eine Intentionshypothese bestimmt, das heißt, das System bildet eine Hypothese darüber, welcher Bedienhandlungstypen wahrscheinlich vom Nutzer intendiert war. Die Ausgabe wird dann mit einem Hinweis auf den gemäß der Intentionshypothese intendierten Bedienhandlungstypen erzeugt.

Beispielsweise kann als Intentionshypothese derjenige Bedienhandlungstyps bestimmt werden, welcher eine höchste Ähnlichkeit zu der erfassten Bedienhandlung aufweist. Dabei wird ferner berücksichtigt, welche potentiellen Bedienhandlungstypen tatsächlich aktuell zur Verfügung stehen. Ferner können anhand der Bedienhistorie solche Bedienhandlungstypen berücksichtigt werden, die der Nutzer bevorzugt verwendet, oder es kann bestimmt werden, ob die erfasste Bedienhandlung besondere Ähnlichkeiten zu einer in der Vergangenheit erfassten Bedienhandlung aufweist, bei welcher der Nutzer einen bestimmten Bedienhandlungstyps nicht optimal ausgeführt hat.

Zum Beispiel kann als Bedienhandlung ein Sprachbefehl erfasst werden, der eine klangliche oder semantische Ähnlichkeit zu einem potentiellen Bedienhandlungstyp aufweist, der dann als Intentionshypothese bestimmt wird. Bei einem weiteren Beispiel kann eine dreidimensionale Geste als Bedienhandlung erfasst werden, die eine derzeit nicht vorgesehene Richtung aufweist, etwa eine vertikale Richtung statt einer horizontalen Richtung, wobei dann ein Bedienhandlungstyp mit einer horizontalen Richtung als Intentionshypothese bestimmt wird. Bei einem weiteren Ausführungsbeispiel wird ferner anhand der Bedienhistorie und/oder anhand einer erfassten Bedienhandlung ein Lernvorgang durchgeführt, wobei die Erkennung des Bedienhandlungstyps durch das System verbessert wird. Hierzu können an sich bekannte Verfahren etwa des Maschinenlernens angewandt werden. Auf diese Weise wird bei dem Verfahren sowohl ein Lernbedarf für den Nutzer erkannt, dem die optimale Anwendung eines bevorzugten Bedienhandlungstyps ermöglicht wird, als auch ein Lernbedarf des Systems, für welches die Erkennung eines bestimmten Bedienhandlungstyps für den Nutzer verbessert wird.

Bei einem weiteren Ausführungsbeispiel wird in dem Erfassungsbereich 7 eine Zeigegeste des Nutzers erfasst und anhand der erfassten Zeigegeste eine Richtung bestimmt. Es wird bestimmt, auf welche Einrichtung 9 des Fahrzeugs 1 der Nutzer zeigt und diese Einrichtung 9 wird ausgewählt. Eine anschließend erfasste Bedienhandlung wird als Bedienung der ausgewählten Einrichtung 9 behandelt, das heißt, anhand der Bedienhandlung wird ein Steuersignal für die ausgewählte Einrichtung 9 erzeugt. Zum Beispiel zeigt der Nutzer auf eine Schiebetür des Fahrzeugs 1 und führt mittels einer Schiebe- oder Wischgeste in eine Richtung ein automatisches Öffnen oder Schließen der Schiebetür durch. Bei einem weiteren Beispiel zeigt der Nutzer auf ein Display des Fahrzeugs 1, auf dem Bilddaten oder Bedienoberflächen ausgebbar sind, wobei eine anschließende Bedienhandlung als Bedienung der Ausgabe oder der Bedienoberfläche behandelt wird. Auf diese Weise kann die Zahl der zur Verfügung stehenden Bedienhandlungstypen auf relevante Bedienmöglichkeiten für eine bestimmte Einrichtung 9 eingeschränkt werden.

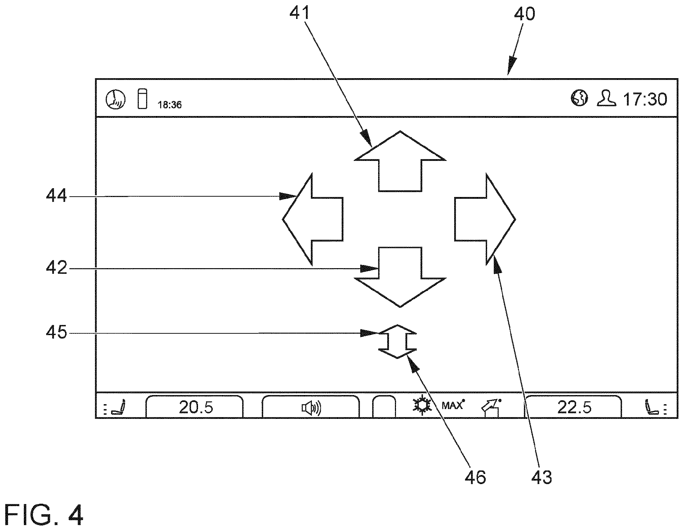

Mit Bezug zu Figur 4 wird ein Ausführungsbeispiel einer bei dem erfindungsgemäßen Verfahren erzeugten Ausgabe mit Hinweisen auf verschiedene Richtungen erläutert. Dabei wird von den erläuterten Ausführungsbeispielen des erfindungsgemäßen Bediensystems und Verfahrens, die durch die weiteren Ausführungsbeispiele weiter spezifiziert werden.

Die Ausgabe 40 gemäß dem Ausführungsbeispiel umfasst Pfeile 41 bis 46, die jeweils eine Raumrichtung darstellen und teilweise als Doppelpfeile ausgebildet sind. Mittels der Pfeile 41 bis 46 wird ausgegeben, in welche Raumrichtungen potentielle Gesten als Bedienhandlungen ausgeführt werden können. Je nach der konkreten Bediensituation und je nachdem, welche potentiellen Bedienhandlungstypen mittels Gesten vorgesehen sind, wird ein Pfeil oder es werden mehrere Pfeile 41 bis 46 gleichzeitig in der Ausgabe 40 dargestellt. Die Pfeile 41 bis 46 können zudem überlagernd zusätzlich zu beliebigen anderen grafischen Darstellungen innerhalb der Ausgabe 40 erzeugt werden.

Bei weiteren Ausführungsbeispielen kann zusätzlich ausgegeben werden, ob und in welcher Weise eine Geste mit einer bestimmten Handhaltung während der Ausführung einer Geste ausgeführt wird, etwa eine geöffnete oder geschlossene Hand, eine nach oben, unten, vorne oder hinten gerichtete Handfläche, gestreckte oder gebeugte Finger oder eine Ausrichtung der Hand im Raum. Dies kann durch zusätzliche grafische Objekte oder eine bestimmte Gestaltung der Pfeile 41 bis 46 ausgegeben werden. Ferner kann statt der Pfeile 41 bis 46 eine andere Darstellung eines grafischen Objekts zur Ausgabe verwendet werden, etwa eines Betätigungsobjekts wie etwa einer Hand, insbesondere schematisch mittels Umrissen. Die Darstellung kann ferner dynamisch erzeugt werden.

Bei dem Ausführungsbeispiel stehen Pfeile nach oben 41 und nach unten 42 für Gesten, die eine Bewegung von oben nach unten umfassen. Mittels derartiger Gesten kann beispielsweise ein Scrollen oder ein Bildlauf in vertikaler Richtung nach oben oder unten implementiert werden. Ferner stehen Pfeile nach rechts 43 und nach links 44 für Gesten mit einer Bewegung zu der jeweiligen Seite hin. Mittels derartiger Gesten kann beispielsweise ein Blättern oder Verschieben zu einer Seite hin implementiert werden. Gesten, die eine Bewegung parallel zur Oberfläche der Ausgabe 40 umfassen, werden insbesondere als Wisch- oder "*Swipe*"-Gesten bezeichnet.

Ferner sind perspektivisch dargestellte Pfeile nach hinten 45 und nach vorne 46, das heißt insbesondere zu der Anzeigefläche der Ausgabe 40 hin beziehungsweise von ihr weg, vorgesehen. Diese Pfeile 45, 46 werden insbesondere perspektivisch dargestellt, wobei an sich bekannte Weisen der grafischen Darstellung so genutzt werden, dass ein räumlicher Eindruck beim Betrachter der Ausgabe 40 so entsteht, dass ein Pfeil nach hinten 45 oder nach vorne 46 in die Ebene der Ausgabe 40 hinein und damit vom Betrachter weg beziehungsweise aus der Ebene der Ausgabe 40 heraus und damit zum Betrachter hin zeigt.

Bei weiteren Ausführungsbeispielen sind andere Pfeilformen denkbar, insbesondere gerade oder gebogene Verläufe, durch die beispielsweise auf die Ausführung einer Geste mit einer bestimmten Trajektorie, etwa einer Kreisbahn oder einem Kreissegment, hingewiesen wird. Ferner kann die Ausgabe bei weiteren Ausführungsbeispielen so gebildet sein, dass durch sie darauf hingewiesen wird, dass am Anfang und/oder Ende der Ausführung einer Geste, etwa eines Swipe oder einer anderen Bewegung, eine Pose des Betätigungsobjekts für längere oder kürzere Zeit gehalten werden soll. Auf diese Weise kann beispielsweise das Ende einer Bewegung für eine Eingabe mittels einer Geste markiert werden.

Für eine Gestenbedienung wird bei dem Ausführungsbeispiel ein Gestenset verwendet, das auf bestimmte Bedienhandlungstypen, das heißt bestimmte Arten von Gesten, beschränkt ist. Insbesondere ist das Gestenset so gebildet, dass eine vollständige Bedienbarkeit eines Infotainmentsystems ermöglicht wird. Mittels eines solchen Gestensets ist ein gesamtes System insbesondere hierarchisch gegliederter Daten und Bedienebenen bedienbar, statt nur Teile innerhalb einzelner Kontexte zu bedienen. Ein solches Gestenset umfasst insbesondere eine überschaubare Anzahl von Gesten, damit sich der Nutzer diese merken kann. Zugleich sind die Gesten eines solchen Gestensets so gebildet, dass sie besonders deutlich voneinander unterschieden und leicht erfasst werden können, etwa mittels einer Kamera.

Bei dem Ausführungsbeispiel umfasst das Gestenset fünf Basisgesten. Anhand von Figur 4 wird eine grafische Anzeige mit grafischen Objekten 41 bis 46 erläutert, mittels welcher Hinweise auf die Basisgesten ausgegeben werden können.

Bei einer Geste "*Swipe,* horizontal" bewegt sich eine Hand insbesondere in Hochkant-Haltung in eine horizontale Richtung nach rechts oder links, insbesondere relativ zu einem Bedienobjekt, das beispielsweise auf einer Anzeigefläche oder innerhalb der Ausgabe 40 ausgegeben wird. Ein Halten der Pose der Hand am Ende der Geste führt insbesondere zu einer andauernden Funktion, etwa indem eine dauernde Betätigung erfasst wird. Bei einer Geste "*Swipe,* vertikal" bewegt sich eine Hand in flacher oder liegender Haltung in eine vertikale Richtung nach oben oder unten, insbesondere relativ zu dem Bedienobjekt. Auch hier kann ein Halten der Pose der Hand am Ende der Geste insbesondere zu einer andauernden Funktion führen, etwa indem eine dauernde Betätigung erfasst wird. Bei einer "OK"-Geste bewegt sich eine Hand mit einer Handfläche nach oben, wobei die Fingerspitzen insbesondere in Richtung des Bedienobjekts, das etwa auf einem Bildschirm angezeigt wird, zeigen. Bei einer "Stopp"-Geste bewegt sich eine Hand in offener Haltung und mit der Handfläche zum Bedienobjekt, insbesondere in eine Richtung zum Bedienobjekt hin. Auch hier kann eine Pose der Hand am Ende der Geste gehalten und als dauernde Betätigung erfasst werden. Bei einer "Lautstärke"-Geste schließlich kann ein Zeigefinger auf das Bedienobjekt zeigen und beispielsweise in seitlicher Richtung bewegt werden. Zur Erleichterung der Merkfähigkeit sind die meisten der genannten Basisgesten jeweils paarweise in gegengesetzte Richtungen ausführbar. Mittels einer Swipe-Geste lässt sich beispielsweise sowohl nach rechts als auch nach links beziehungsweise nach oben oder unten wischen. Das Auswählen oder Betätigen des Bedienobjekts, etwa um in eine bestimmte Hierarchieebene oder in ein bestimmtes Menü zu gelangen oder um eine Anfrage zu bestätigen, erfolgt durch eine Bewegung zum Körper hin, das Verlassen einer Hierarchieebene oder eines Menüs oder das Ablehnen einer Anfrage erfolgt durch die gegengesetzte Bewegung vom Körper weg.

Diese paarweisen Gesten werden genutzt, um die komplette Navigation durch eine Vielzahl hierarchisch geordneter Menüs oder anderer Hierarchieebenen zu ermöglichen und entsprechen den drei Raumrichtungen im dreidimensionalen Raum. Die Möglichkeiten von Raumgesten werden dadurch anhand aller drei Dimensionen ausgeschöpft. Diese zusätzliche Dimension ermöglicht gegenüber bekannten Bedienungen mit einer zweidimensionalen Bedienung, etwa per Touchscreen, eine bessere Strukturierung der Inhalte und entspricht der räumlichen Denkweise des Nutzers in größerem Maße.

Die genannten Basisgesten zur Navigation durch Menüs oder hierarchisch geordnete Elemente folgen insbesondere dem Prinzip, dass das zu bedienende Element nicht zuvor auf dem Bildschirm selektiert werden muss, etwa durch eine Zeigegeste auf ein bestimmtes Objekt. Stattdessen ist insbesondere stets ein Element der Ausgabe bereits ausgewählt. Die Geste wird dann als unmittelbar auf dieses Element bezogene Eingabe ausgewertet. Beispielsweise kann für ein in der Mitte einer Anzeigefläche angezeigtes und bereits automatisch ausgewähltes Bedienobjekt direkt ein "Öffnen"-Vorgang durchgeführt werden, etwa mittels einer "OK"-Geste. Um das Bedienobjekt auszuwählen, kann es dabei mittels einer Swipe-Geste in die Mitte der Anzeigefläche oder in einen anderen automatischen Auswahlbereich verschoben werden. Insbesondere in einem Fahrzeug hat dies den Vorteil, dass Inhalte zuverlässig und einfach ausgewählt werden können, auch wenn beispielsweise Erschütterungen bei der Fahrt eine genaue Navigation erschweren, im Gegensatz beispielsweise zu bekannten Bedienungen mittels eines Cursors oder eines Touchscreens.

Bei dem oben erläuterten Gestenset ist ferner vorgesehen, dass eine Lautstärke oder ein anderer Parameter des Systems mittels einer entsprechenden "Lautstärkegeste" geregelt wird. Beispielsweise zeigt der Nutzer mit ausgestrecktem Zeigefinger oder einem Betätigungsobjekt in Richtung des Bedienobjekts oder einer Anzeigefläche. Die Lautstärkeregelung kann dadurch angezeigt werden, dass ein Lautstärke-Anzeiger als Popup angezeigt wird, wobei ein Lautstärkepegel durch seitliche Bewegung des Fingers geregelt werden kann. Der Lautstärke-Anzeige folgt dabei insbesondere der Bewegung des Fingers und die Lautstärke wird erhöht oder reduziert.

Ferner können Optionsgesten definiert sein, die nicht einer Menünavigation dienen, sondern als Shortcuts zum Aufruf bestimmter Funktionen dienen. Insbesondere sind drei Optionsgesten vorgesehen, nämlich zum Direktsprung zum Homescreen (Stopp-Geste mit Bildung einer Faust am Ende), zum Aufrufen eines Tutorials, das die Gesten und deren Funktionen zeigt und erklärt (Winken) sowie zum Stummschalten einer Tonwiedergabe (Bewegung der geöffneten Hand nach unten). Die Optionsgesten führen bei dem Ausführungsbeispiel stets zum Aufrufen der gleichen Funktion, unabhängig vom jeweiligen Kontext, in dem sie ausgeführt werden.

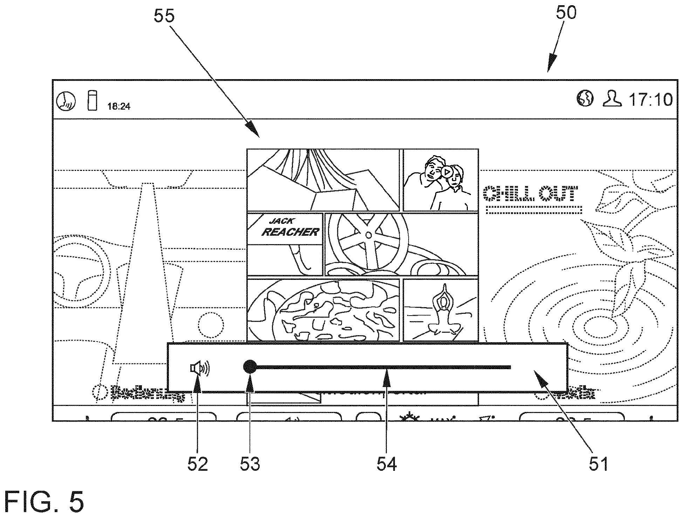

Mit Bezug zu Figur 5 wird ein Ausführungsbeispiel einer bei dem erfindungsgemäßen Verfahren erzeugten Ausgabe mit einem Popup zur Lautstärkeregelung erläutert. Dabei wird von den erläuterten Ausführungsbeispielen des erfindungsgemäßen Bediensystems und Verfahrens ausgegangen, die durch die weiteren Ausführungsbeispiele weiter spezifiziert werden.

Die Ausgabe 50 gemäß dem Ausführungsbeispiel umfasst ein grafisches Objekt 51, welches hier für eine aktuell abgespielten Mediendatei steht, sowie ein Lautstärke-Bedienobjekt 51, welches als Popup die weiteren Elemente der Ausgabe 50 überlagernd ausgegeben wird. Das Lautstärke-Bedienobjekt 51 umfasst ein Lautstärkesymbol 52 sowie ein Skalenobjekt 54, das als horizontale gerade Linie ausgebildet ist, wobei verschiedenen Positionen der Längserstreckung verschiedene Werte der Lautstärke zugeordnet sind, insbesondere eine von links nach rechts steigende Lautstärke. An dem Skalenobjekt 51 ist ein Zeigerobjekt 53, hier ein ausgefüllter Kreis, angeordnet, wobei die Position des Zeigerobjekts 53 an dem Skalenobjekt 51 den aktuell eingestellten Wert der Lautstärke anzeigt.

Bei dem Ausführungsbeispiel gelangt ein Nutzer zu der dargestellten Ausgabe 50, wenn er während der durch das grafische Objekt 55 angezeigten Wiedergabe einer Mediendatei seinen gestreckten Zeigefinger auf die Ausgabe 50 richtet und eine horizontale Bewegung durchführt. Entsprechend der Bewegung des Zeigefingers, insbesondere proportional dazu, wird in der Ausgabe 50 das Zeigerobjekt 53 entlang des Skalenobjekts 51 verschoben und im gleichen Maße der eingestellte Wert der Lautstärke verändert.

Bei dem Ausführungsbeispiel ist das Lautstärke-Bedienobjekt 51 auch mittels einer Berührung des Touchscreens 2, der die Ausgabe 50 ausgibt, bedienbar. Der Nutzer kann beispielsweise das Zeigerobjekt 53 berühren und mittels einer Wischgeste entlang des Touchscreens 2 entlang des Skalenobjekts 54 verschieben. Er kann ferner mittels einer Berührung des Skalenobjekts 54 einer bestimmten Position den dieser Position zugeordneten Wert der Lautstärke einstellen, wobei das Zeigerobjekt 53 an die Position der Berührung verschoben wird.

Die oben beschriebene Zeigegeste mittels eines ausgestreckten Zeigefingers in Richtung der Ausgabe 50, gefolgt von einer Bewegung in horizontaler Richtung, wird bei dem Ausführungsbeispiel insbesondere als "Lautstärkegeste" bezeichnet. Es handelt sich hierbei insbesondere um eine Optionsgeste, die bei dem Ausführungsbeispiel unabhängig vom aktuell ausgegebenen Kontext angewendet werden kann. Das heißt, unabhängig davon, was in der Ausgabe 50 ausgegeben wird, kann mittels der Lautstärkegeste die aktuell eingestellte Lautstärke angezeigt und verändert werden. Dies vereinfacht die Bedienung, da ein bestimmter Kontext oder Inhalt aufgerufen werden muss, um die Lautstärke zu verändern.

Insbesondere können die Lautstärkegeste sowie weitere Optionsgesten bei dem Beispiel in jedem Kontext angewendet werden können, das heißt unabhängig von der gerade aktiven Anzeige oder einem aktuell ausgewählten Bedienobjekt. Beispielsweise beeinflussen die Lautstärkegeste zur Lautstärkeregelung und eine Geste zum Stummschalten die Lautstärke des gerade aktiven akustischen Kontexts, ähnlich wie etwa an sich bekannte analoge Lautstärkeregler, die etwa einen Drehregler verwenden.

Bei den in dieser Beschreibung erläuterten Ausführungsbeispielen des erfindungsgemäßen Verfahrens können verschiedene Bedienmodalitäten verwendet werden, um Funktionalitäten zu bedienen. Dabei werden insbesondere bevorzugte Bedienmodalitäten bestimmt, die je nach der konkreten Situation angeben, auf welche Weise eine Bedienung besonders vorteilhaft durchgeführt werden kann. Die Bedienung kann mittels der bevorzugten Bedienmodalität beispielsweise besonders sicher, schnell, mit geringerem physischem Aufwand und/oder ohne übermäßige Beanspruchung der Konzentration des Nutzers erfolgen.

Mögliche Bedienmodalitäten sind etwa Betätigung oder Durchführung von Gesten während einer Berührung einer Oberfläche oder eines Bedienobjekts, Gesten im dreidimensionalen Raum, Betätigungen analoger Bedienelemente wie Schalter, Taster oder Regler, Sprachbefehle, Verwenden einer Fernbedienung oder eine Gestenbedienung in Verbindung mit Sprachbefehlen.

Die Bedienung eines Infotainmentsystems kann beispielsweise vollständig über verschiedene Modalitäten ermöglicht werden, um einem Nutzer die persönlich präferierte Bedienmodalität zu gewähren. So bevorzugen manche Nutzer grundsätzlich eine Sprachbedienung, andere eine Gestenbedienung. Der Nutzer kann dadurch ferner situationsabhängig frei die eine oder die andere Modalität wählen, zum Beispiel eine Geste anstelle der Sprache, um einen schlafenden Beifahrer nicht zu stören. Ferner wird bei dem Beispiel dem Nutzer nahegelegt, welcher Bedienhandlungstyp und/oder welche Bedienmodalität derzeit und für die aktuell bedienbaren Funktionen am besten geeignet ist. Eine bevorzugte Bedienmodalität wird bei dem Ausführungsbeispiel anhand der folgenden Logik bestimmt:
Eine Gestenbedienung kann besonders dann eine bevorzugte Bedienmodalität sein, wenn ein "unscharfes", nicht konkret zu benennendes Bedienziel vorliegt, wenn also der Nutzer beispielsweise eine Suche durchführt oder durch eine Reihe von Objekten navigiert ("*browsing*") sowie wenn eine genaue Benennung beispielsweise eines Sonderziels umständlich einzugeben wäre. Eine Gestenbedienung kann ferner bei kurzen Interaktionen bevorzugt sein oder wenn sprachliche Unterbrechungen in einer bestimmten Situation störend sind. Sie kann ferner für eine räumliche Auswahl oder räumliche Bedienung bevorzugt sein.

Ein Bedienung mittels Sprachbefehlen kann dann besonders vorteilhaft sein, wenn das Bedienziel klar benennbar ist, beispielsweise wenn der Nutzer eine Bezeichnung für eine zu bedienende Funktion oder Einrichtung leicht aussprechen kann. Der Nutzer kann mittels Sprachbefehlen ferner besonders einfach über mehrere Hierarchieebenen springen, ohne zunächst eine längere Suche durchführen zu müssen. Ferner können natürlichsprachliche Eingaben vorgesehen sein.

Eine Bedienung mittels einer Fernbedienung kann dann bevorzugt sein, wenn eine dem Nutzer besonders gut vertraute Bedienung gewährleistet werden soll.

Eine Bedienung mittels einer Kombination von Gesten und Sprachbefehlen kann dann bevorzugt sein, wenn mit einer Einheit interagiert werden soll, deren Benennung unklar oder umständlich ist oder wenn eine besondere Bedienhandlung zum Aktivieren der Sprachsteuerung, etwa das Drücken eines Tastteils oder ein bestimmtes Codewort, umgangen werden soll.

Bei dem Beispiel wird eine Gestenbedienung als bevorzugte Bedienmodalität bestimmt, wenn eine Suche oder ein *Browsen* durchgeführt werden soll, etwa um einen Namen oder eine Adresse zu suchen oder um eine Suche innerhalb einer Liste von Film- oder Musiktiteln durchzuführen. Ferner ist die Gestenbedienung bevorzugt für kurze Interaktionen, wie etwa das Annehmen eines Telefonats, für die Bedienung von Bedienteilen oder Umweltelementen, die am leichtesten räumlich zu selektieren sind oder deren Name nicht bekannt ist, etwa um ein bestimmtes Fenster zu bedienen oder eine bestimmte Beleuchtungseinrichtung einzustellen, sowie wenn eine Unterbrechung durch einen Sprachbefehl stören würde, etwa während eines Telefonats oder wenn ein Beifahrer gestört würde.

Insbesondere werden bei dem Beispiel des Systems zwar mehrere Bedienmodalitäten für eine Bedienung unterstützt, es wird jedoch in der Ausgabe auf die jeweils am besten geeignete Art der Bedienung hingewiesen.

Beispielsweise wird auf die Gestenbedienung zur Annahme eines eingehenden Anrufs hingewiesen, indem visuelle Elemente für verschiedene Bedienoptionen in ähnlicher Weise dynamisch bewegt dargestellt werden, wie eine zugeordnete Bediengeste auszuführen ist. Insbesondere wird eine Bewegung der Bedienelemente in die Richtungen dargestellt, in welche die entsprechenden Gesten auszuführen sind. Gleichzeitig sind die Bedienelemente bei dem Beispiel jedoch auch selbst bedienbar, etwa durch Berühren einer Anzeigefläche im Bereich der Bedienelemente. Bei weiteren Beispielen kann ferner die Möglichkeit einer Sprachbedienung vorgesehen sein; ein Hinweis auf die entsprechende Möglichkeit wird dann etwa mittels eines angezeigten Textes, der den entsprechenden Sprachbefehl wiedergibt, oder mittels eines Symbols für die Sprachsteuerung ausgegeben.

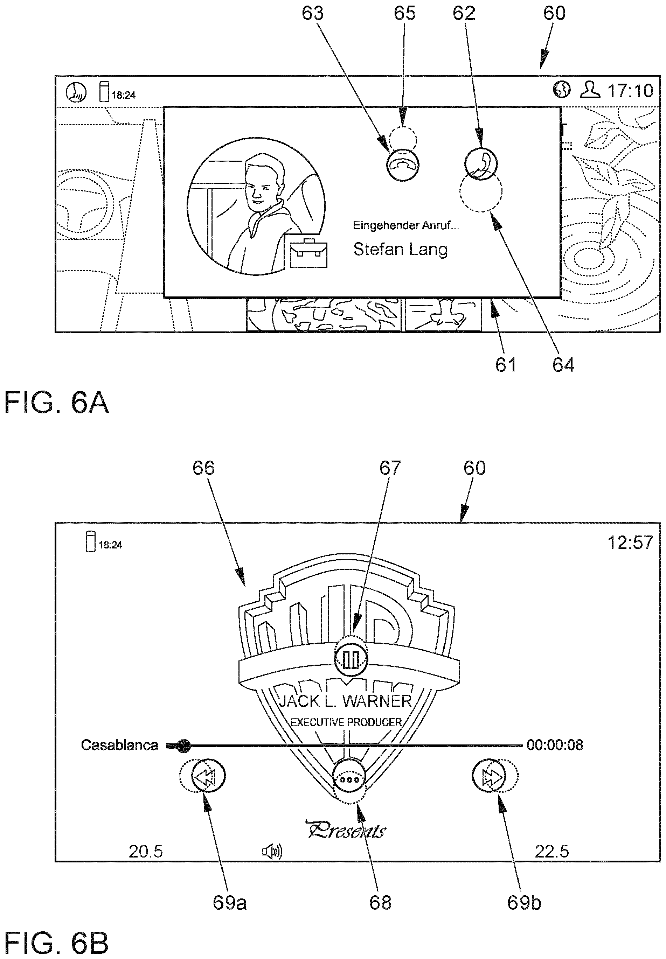

Mit Bezug zu den Figuren 6A und 6B werden Ausführungsbeispiele von bei dem erfindungsgemäßen Verfahren erzeugten Ausgaben mit Hinweisen zur Ausführung von Bediengesten erläutert. Dabei wird von den erläuterten Ausführungsbeispielen des erfindungsgemäßen Bediensystems und Verfahrens ausgegangen, die durch die weiteren Ausführungsbeispiele weiter spezifiziert werden.

Die Ausgabe 60 gemäß dem Ausführungsbeispiel umfasst bei dem in Figur 6A gezeigten Fall ein Popup 61, welches die weiteren Elemente der Ausgabe 60 überlagernd ausgegeben wird. Im Bereich des Popups 61 werden Informationen über einen eingehenden Anruf ausgegeben, insbesondere der Name des Anrufers und ein Profilbild, wobei diese Informationen einer Datenbank mit Kontakten und zugeordneten Zusatzinformationen zugeordnet sind. Das Popup 61 umfasst ferner ein Bedienelement 62 zum Annehmen und ein weiteres Bedienelement 63 zum Ablehnen des eingehenden Anrufs.

Bei dem Ausführungsbeispiel können die Bedienelemente 62, 63 durch Tippgesten bedient werden, wobei der Nutzer den Touchscreen 2 einer Position des jeweiligen Bedienelements 62, 63 kurzzeitig berührt, um die jeweils zugeordnete Funktion auszuführen. Zudem ist bei dem Ausführungsbeispiel eine Gestenbedienung vorgesehen. Bei dem Beispiel wird bestimmt, dass die Gestenbedienung die bevorzugte Bedienmodalität darstellt, das heißt, eine Bedienung zum Annehmen oder Ablehnen des Anrufs erfolgt bevorzugt durch eine diesen Funktionen jeweils zugeordnete Geste. Diese Bevorzugung ist bei dem Ausführungsbeispiel dadurch bedingt, dass sich die Sitzposition des Nutzers weit entfernt von dem Touchscreen 2 befindet und dieser daher nur schwierig berührt werden kann.

Die Gesten zum Annehmen oder Ablehnen des Anrufs werden dadurch ausgegeben, dass die Bedienelemente 62, 63 dynamisch dargestellt werden. In Figur 6A ist dies durch dynamische Objekte 64, 65 angedeutet. Zum Annehmen des Anrufs soll der Nutzer eine Geste durchführen, bei welcher er seine Hand in eine Richtung senkrecht zur Ebene der Ausgabe 60 von dieser weg bewegt, etwa entsprechend einer "Herwinken"-, "Herziehen"- oder "Heranholen"-Geste. Umgekehrt soll der Nutzer zum Ablehnen des Anrufs eine Geste durchführen, bei welcher er seine Hand in eine Richtung senkrecht zur Ebene der Ausgabe 60 zu dieser hin bewegt, etwa entsprechend einer "Wegschiebe"-, "Ablehnung"- oder "Abweisung"-Geste. Die entsprechenden Bedienelemente 62, 63 werden dynamisch und perspektivisch so dargestellt, dass sie eine Bewegung in eine Richtung aufzuweisen scheinen, die der jeweiligen Bewegung der Geste entspricht.

Bei weiteren Ausführungsbeispielen wird die Ausgabe 60 mittels einer dreidimensionalen Darstellungstechnik erzeugt, etwa mittels einer autostereoskopischen oder holographischen Darstellung.

Bei dem in Figur 6A gezeigten Fall wird also eine animierte Ausgabe erzeugt, die Bedienelemente zum Annehmen und Ablehnen des Anrufs umfasst, wobei die Bedienelemente in Richtung der auszuführenden Geste bewegt dargestellt werden. Mittels einer perspektivischen Darstellung wird eine Bewegung der Bedienobjekte vom Fahrer weg oder zum Fahrer hin dargestellt, wobei sich ein roter (Ablehnen) und grüner (Annehmen) Kreis mittels Anzeige zahlreicher kleiner beziehungsweise größerer Kreise räumlich im Display zu bewegen scheinen.

Bei dem in Figur 6B gezeigten Fall umfasst die Ausgabe 60 eine Hintergrunddarstellung 66, die hier eine Wiedergabe einer Videodatei entspricht. Die Ausgabe 60 umfasst ferner Bedienelemente 67, 68, 69a, 69b, die ähnlich wie die Bedienelemente 62, 63 im Fall der Figur 6A sowohl durch Berühren des Touchscreens 2 betätigt werden können, als auch zur Ausgabe von Hinweisen auf potentielle Bedienungsgesten dienen. Bei dem Ausführungsbeispiel werden die Bedienelemente 67, 68, 69a, 69b insbesondere dann angezeigt, wenn eine Bedienabsicht erfasst wurde, etwa beim Eintreten eines Betätigungsobjekts in den Erfassungsraum 7 oder bei einer Berührung des Touchscreens 2.

Wie bereits oben mit Bezug zu Figur 6A erläutert, sind auch hier die Bedienelemente 67, 68, 69a, 69b dynamisch dargestellt. Sie zeigen Bewegungen, die den Bewegungen potentieller Bediengeste entsprechen. Beispielsweise ist ein Bedienelement 67 zum Anhalten der Wiedergabe vorgesehen und mit einem entsprechenden Symbol ausgebildet. Das Bedienelement 67 wird ferner animiert so dargestellt, dass es sich von dem Nutzer zu entfernen scheint. Die entsprechende Bediengeste zum Anhalten umfasst demnach eine Bewegung auf die Ausgabe 60 zu, etwa entsprechend einer "Drücken"-Geste. Bei dem Ausführungsbeispiel wird ferner das Bedienelement 68 zum Aufrufen eines Kontextmenüs nach unten bewegt dargestellt und die entsprechende Bediengeste umfasst ein Wischen nach unten. Die Bedienelemente 69a, 69b zum Spulen zurück (Bedienelement 69a) beziehungsweise nach vorne (Bedienelement 69b) werden mit Bewegungen nach links beziehungsweise rechts animiert dargestellt, was auch hier der Bewegung der jeweiligen Bediengesten, insbesondere Wischgesten, entspricht.

Bei weiteren Ausführungsbeispielen können die Bediengeste noch andere Weise ausgebildet oder unterschiedlich kombiniert werden. Insbesondere basieren die vorgesehenen Gesten auf dem oben mit Bezug zu Figur 4 erläuterten Set von Basisgesten, optional ergänzt durch die ebenfalls oben erläuterten Optionsgesten.

Bei dem Beispiel wird mittels einer Gestenbedienung nicht nur durch eine Menühierarchie navigiert, sondern es werden auch Kontexte bedient. Aufgrund der Unterschiedlichkeit der Kontexte sind unterschiedliche Funktionen vorgesehen. Wie oben mit Bezug zu den Figuren 6A und 6B erläutert, kann beispielsweise ein eingehendes Telefonat angenommen oder abgelehnt werden. Ferner kann ein aktuell wiedergegebener Film in beide Richtungen geschult oder pausiert werden. Zudem ist ein Kontextmenü wählbar, um Zusatzoptionen einzustellen, etwa Untertitel oder eine Sprache. Die Vielfalt der notwendigen Funktionen wird mittels des oben erläuterten Gestensets bedient, wobei beispielsweise das Ablehnen eines Telefonats durch dieselbe Stopp-Geste erfolgt wie das Pausieren eines Films. Damit der Nutzer weiß, in welchem Kontext ihm welche Bedienoptionen zur Verfügung stehen, wird dem Nutzer kontextabhängig angezeigt, welche Gesten möglich sind und welche Funktion sie jeweils haben. Ferner kann ausgegeben werden, welches die bevorzugte Bedienmodalität ist.

Bei dem Ausführungsbeispiel für einen eingehenden Anruf werden also zwei als "*Bubbles"* dargestellte Bedienobjekte 62, 63 angezeigt, bei dem Beispiel eines Films mehrere Bedienobjekte 67, 68, 69a, 69b als *Bubbles.* Diese *Bubbles* enthalten jeweils ein Symbol und optional eine Farbe, wodurch die Funktion ausgegeben wird. Beispielsweise steht ein Hörersymbol in roter Farbe für ein Beenden des Telefonats oder ein Pausezeichen steht für das Pausieren. Die *Bubbles* bewegen sich ferner in die Richtung, in welche die entsprechende Geste auszuführen ist, das heißt nach rechts oder links, oben oder unten, oder perspektivisch zum Nutzer hin oder von ihm weg.

Bei dem Anzeigekonzept wird der Nutzer auf die verfügbaren Bedienhandlungstypen der Gestensteuerung oder andere bevorzugte Bedienhandlungstypen hingewiesen, indem diese kontextspezifisch angezeigt werden. Dadurch reduziert sich der Merkaufwand für den Nutzer und die Anzahl ungewollter Bedienungen wird reduziert.

Die oben mit Bezug zu den Figuren 6A und 6B beschriebenen Darstellungen sind besonders gut dazu geeignet, dem Nutzer leicht und intuitiv erfassbar, dabei aber wenig auffällig und subtil zu signalisieren, welche Bedienmöglichkeiten er in der jeweiligen Bediensituation hat. Alternativ oder zusätzlich können andere Ausgaben verwendet werden, um den Nutzer zur Verwendung bestimmter Bediengesten aufzufordern. Zum Beispiel können die oben mit Bezug zu Figur 4 beschriebenen Pfeile 41 bis 46 ausgegeben werden, wobei solche zusätzlichen Objekte jedoch häufig als störend empfunden werden. Die räumlich dargestellte Bewegung von Elementen in Gestenrichtung kann dagegen auch ohne zusätzliche Grafikobjekte ausgegeben werden, sodass die ausgegebene Bedienoberfläche nicht überfüllt wird.

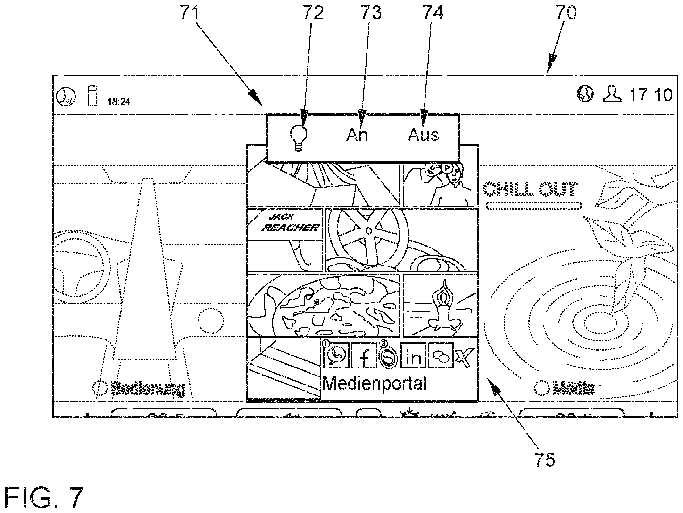

Mit Bezug zu Figur 7 wird ein Ausführungsbeispiel einer bei dem erfindungsgemäßen Verfahren erzeugten Ausgabe mit einem Popup zum Steuern einer Beleuchtungseinrichtung erläutert. Dabei wird von den erläuterten Ausführungsbeispielen des erfindungsgemäßen Bediensystems und Verfahrens ausgegangen, die durch die weiteren Ausführungsbeispiele weiter spezifiziert werden.

Die Ausgabe 70 gemäß dem Ausführungsbeispiel umfasst ein grafisches Objekt 75, welches hier für eine aktuell abgespielten Mediendatei steht, sowie ein Popup 71, welches die weiteren Elemente der Ausgabe 70 überlagernd ausgegeben wird. Das Popup 71 umfasst ein Helligkeitssymbol 72 sowie Bedienelemente 73, 74 zum Anschalten beziehungsweise Ausschalten einer Beleuchtungseinrichtung.

Bei dem Ausführungsbeispiel gelangt ein Nutzer zu der dargestellten Ausgabe 70, wenn er während der durch das grafische Objekt 75 angezeigten Wiedergabe einer Mediendatei seinen gestreckten Zeigefinger auf eine Einrichtung des Fahrzeugs 1 richtet und diese Zeigegeste eine vorgegebene Zeit hält. Entsprechend der Richtung des Zeigefingers wird bestimmt, auf welche Einrichtung des Fahrzeugs 1 der Nutzer zeigt, bei dem Ausführungsbeispiel eine Beleuchtungseinrichtung. Anschließend wird das Popup 71 erzeugt, das Bedienelemente 73, 74 umfasst, welche auf die möglichen Bedienungen hinweisen. Bei dem Ausführungsbeispiel gibt es auch hier verschiedene potentielle Bedienmodalitäten, insbesondere das Berühren des Touchscreens 2 im Bereich der Bedienelemente 73, 74 oder Sprachbefehle. Bei dem Ausführungsbeispiel ist die weitere Bedienung mittels Sprachbefehlen bevorzugt, für deren Durchführung die Bedienelemente 73, 74 als Textelemente ausgebildet sind. Hierdurch wird dem Nutzer angezeigt, mittels welcher Sprachbefehle er die Einrichtung bedienen kann.

Zusätzlich dazu kann bei dem Ausführungsbeispiel ferner eine Bedienung mittels einer weiteren Zeigegeste vorgenommen werden, wobei der Nutzer auf eines der Bedienelemente 73, 74 innerhalb des Popup 71 zeigt, um dieses zu betätigen und die damit verknüpfte Funktion auszulösen. Ferner kann vorgesehen sein, dass eine Bedienung mittels einer weiteren Bediengeste durchgeführt werden kann, etwa ein Wischen nach unten zum Ausschalten oder nach oben zum Anschalten.

Bei dem in Figur 7 gezeigten Ausführungsbeispiel kann eine Bedienung also bevorzugt mittels einer Geste in Kombination mit einem Sprachbefehl ausgeführt werden. Diese Bedienmodalität wird als bevorzugt bestimmt, wenn eine Einrichtung des Fahrzeugs bedient werden soll, ohne dass hierfür eine bestimmte Wake-Up-Phrase zum Aktivieren einer reinen Sprachbedienung genutzt werden soll. Der Nutzer zeigt bei diesem Beispiel auf die zu bedienende Einrichtung, die bei dem Beispiel eine Leuchte im Innenraum des Fahrzeugs ist. Anschließend setzt er die Bedienung mittels Sprachbefehl fort. Um dem Nutzer nach der Zeigegeste anzuzeigen, dass eine Sprachbedienung durchgeführt werden kann, wird ein Popup mit den möglichen Sprachoptionen angezeigt.

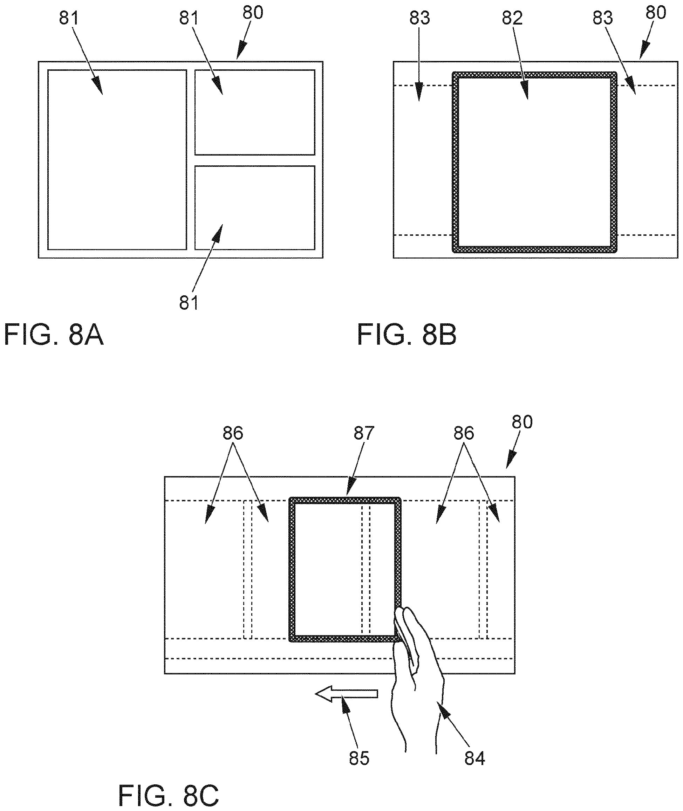

Mit Bezug zu den Figuren 8A bis 8D wird ein Ausführungsbeispiel einer bei dem Verfahren erzeugten Ausgabe und ihre Bedienung in verschiedenen Bedienmodi erläutert. Dabei wird von den erläuterten Ausführungsbeispielen des erfindungsgemäßen Bediensystems und Verfahrens ausgegangen, die durch die weiteren Ausführungsbeispiele weiter spezifiziert werden.

Bei dem in Figur 8A gezeigten Fall befindet sich das Bediensystem in einem Nahmodus, das heißt, der Nutzer ist mit seinem Sitz in Reichweite des Touchscreens 2 angeordnet. Die Ausgabe 80 umfasst mehrere Widgets 81, die nach Art einer Matrix neben- und übereinander angeordnet sind. Die bevorzugte Bedienmodalität ist bei diesem Ausführungsbeispiel im Nahmodus eine Bedienung durch Berühren des Touchscreens 2 und gegebenenfalls Gesten entlang der berührten Oberfläche des Touchscreens 2.

Bei dem in Figur 8B gezeigten Fall wurde ein automatischer Fahrmodus des Fahrzeugs 1 aktiviert und der Sitz des Nutzers, der nun nicht mehr manuell in die Steuerung des Fahrzeugs eingreifen muss, wurde nach hinten verfahren. Der Touchscreen 2 ist dadurch schwer erreichbar und der Bedienmodus wird daher zu einem Distanzmodus umgeschaltet. Die bevorzugte Bedienmodalität ist nunmehr die Bedienung mittels Gesten im dreidimensionalen Raum, insbesondere im Erfassungsbereich 7 im Innenraum des Fahrzeugs 1. Beim Wechsel des Bedienmodus ändert sich auch die Ausgabe 80 so, dass die Anzeige nunmehr für die neue bevorzugte Bedienmodalität optimiert ist.

Das heißt, bei dem Ausführungsbeispiel ist das Bediensystem sowohl mittels eines Touchpads, als auch mittels Gesten bedienbar. Bei zumindest teilweise automatischen Fahrmodi, insbesondere bei einem Automatisierungsgrad von *Level 4* oder *Level 5*, wird insbesondere ein Fahrersitz nach hinten verfahren um einen höheren Sitzkomfort zu ermöglichen, wodurch jedoch auch eine Bedienung eines Touchscreens am Armaturenbrett aufgrund der Nichterreichbarkeit des Displays erschwert wird. In diesem Fall soll eine Gestenbedienung als bevorzugte Bedienmodalität bereitgestellt werden. Hierfür muss das Anzeigekonzept angepasst werden, da nicht alle Anzeigen gut für eine Gestenbedienung geeignet sind. Ferner wären sonst aufgrund der größeren Sitzentfernung zu klein dargestellte Inhalte schwer sichtbar.

Bei dem Beispiel wird für displayferne Sitzpositionen eine für die Gestenbedienung optimierte Anzeige in einem "Distanzmodus" angezeigt. Dabei werden bei dem Beispiel lediglich drei "Kontexte", bei dem Ausführungsbeispiel ausgebildet als Kacheln, Widgets oder Fenster, zeitgleich angezeigt. Diese werden ausreichend groß dargestellt, um auch aus größerer Distanz erkennbar zu sein.

Da bei einer Bedienung mittels Gesten eine einfachere Struktur der Anzeige von Nutzen ist, sind die Objekte 82, 83 der Ausgabe 80 nun nebeneinander angeordnet. Dabei ist das in der Mitte angeordnete Objekt 82 stets automatisch ausgewählt, während die weiteren Objekte 83 daneben angeordnet sind. Bei dem Ausführungsbeispiel wird das ausgewählte Objekt 82 ferner hervorgehoben dargestellt, indem es mit einer größeren Fläche, einer besonderen Umrandung und gegenüber den weiteren Objekten 83 mit stärkerer Helligkeit ausgegeben wird.

Das heißt, bei der Anzeige im Distanzmodus sind die Kontexte einzeilig angeordnet, während sie für eine Touchbedienung mehrzeilig angeordnet sind. Der mittlere Kontext beziehungsweise die mittlere Kachel befindet sich immer im Fokus, das heißt, sie ist stets automatisch ausgewählt, und ist optisch größer, heller und hervorgehoben dargestellt. Dieser Kontext kann also sofort bedient werden , etwa um einen darin dargestellten Film zu starten, ohne den Kontext vorher auswählen zu müssen. Bei einem weiteren Ausführungsbeispiel sind die Kontexte mehrzeilig angeordnet und werden mittels einer Geste, etwa eine Zeigegeste vor dem Öffnen oder Aktivieren ausgewählt.

Bei dem in Figur 8C gezeigten Fall wird dargestellt, wie ein Nutzer durch eine seitliche Wischgeste mit seiner Hand 84 in eine durch einen Pfeil 85 dargestellte Richtung eine Verschiebung der in der Ausgabe 80 gezeigten grafischen Objekte vornimmt. Dabei wird das ausgewählte Objekt 87 aus der Mitte heraus seitlich verschoben und ein weiteres Objekt 86 rückt an seine Stelle, wo es nun automatisch ausgewählt wird. Bei dem Ausführungsbeispiel ist vorgesehen, dass zusätzlich zu der seitlichen Wischgeste im dreidimensionalen Raum auch eine Wischgeste entlang der berührungsempfindlichen Oberfläche des Touchscreen 2 und/oder ein Sprachbefehl zum Verschieben der Objekte 86, 87 genutzt werden kann.

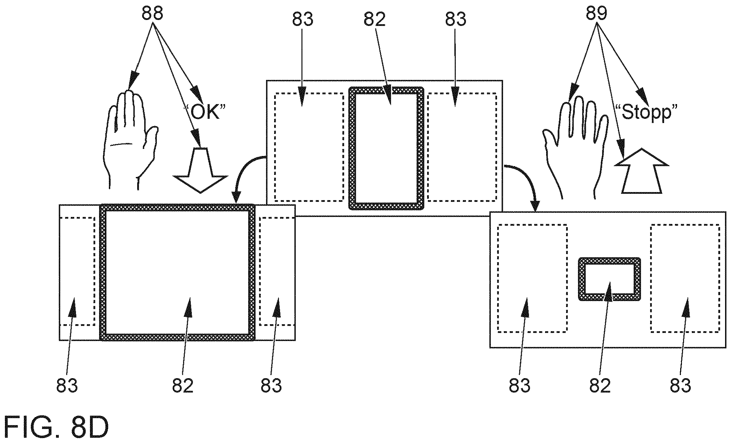

Bei dem in Figur 8D gezeigten Fall wird ausgehend von der mittig dargestellten Situation die Navigation durch einen hierarchisch geordneten Datenbestand oder eine Menüstruktur dargestellt. Zudem können Inhalte eines Infotainmentsystems hierarchisch strukturiert sein. Der Nutzer kann für das aktuelle mittig dargestellte und daher automatisch ausgewählte Objekt 82 eine Betätigung so vornehmen, dass dieses aktiviert oder geöffnet wird oder dass zu einer untergeordneten Hierarchieebene gewechselt wird; die hierzu verwendbaren potentiellen Bedienhandlungstypen sind durch Hinweise 88 dargestellt, die in analoger Weise auch innerhalb der Ausgabe 80 dargestellt werden können. Der Nutzer kann ferner für das ausgewählte Objekt 82 einen Vorgang stoppen oder zu einer übergeordneten Hierarchieebene wechseln; die hierzu verwendbaren potentiellen Bedienhandlungstypen sind durch Hinweise 89 dargestellt.

Zum Aktivieren oder Öffnen eines Kontextes oder zum Wechseln zu einer untergeordneten Hierarchieebene zeigen Hinweise 88 die Möglichkeit einer Bedienung mittels einer dreidimensionalen Handgeste, wobei die Handfläche zum Nutzer hin weist und eine Bewegung zum Nutzer hin durchgeführt wird. Alternativ oder zusätzlich kann der Sprachbefehl "OK" verwendet werden. Umgekehrt zeigen die Hinweise 89 zum Stoppen oder Wechseln zu einer übergeordneten Hierarchieebene einen Hinweis auf eine dreidimensionale Handgeste, bei welcher die Handfläche zum Touchscreen 2 beziehungsweise zur Ausgabe 80 hin weist und wobei eine Bewegung auf die Ausgabe 80 zu durchgeführt wird. Alternativ oder zusätzlich kann der Sprachbefehl "Stopp" verwendet werden.

Figur 8D zeigt ferner, wie die Übergänge zwischen den Hierarchieebenen des Datenbestandes dargestellt werden: Ausgehend von der mittig dargestellten Ausgangssituation wird bei einer Bedienung gemäß den Hinweisen 88, etwa mit einer "OK"-Geste das ausgewählte Objekt 82 vergrößert und die weiteren Objekte 83 werden aus der Darstellung verdrängt. Die Darstellung entspricht also einem Näherkommen des ausgewählten Objekts 82 auf den Nutzer zu beziehungsweise einer Bewegung aus Perspektive des Nutzers auf das ausgewählte Objekt 82 zu. Anschließend werden weitere Objekte der untergeordneten Hierarchieebene auf die gleiche Weise angezeigt, wie in Figur 8D mittig dargestellt, das heißt, ein mittleres Objekt ist automatisch ausgewählt und weitere Objekte sind daneben angeordnet. Umgekehrt wird bei einer Bedienung gemäß den Hinweisen 89, etwa mit einer "Stopp"-Geste das ausgewählte Objekt 82 verkleinert, wobei auch die weiteren Objekte 83 verkleinert werden können. Dies entspricht umgekehrt zu dem oben erläuterten Fall einem Entfernen des ausgewählten Objekts 82 von dem Nutzer beziehungsweise der Nutzer scheint sich von dem ausgewählten Objekt 82 zu entfernen.

Die Ausgabe 80 wird insbesondere so erzeugt, dass das ausgewählte Objekt 82 und die weiteren Objekte 83 so nebeneinander dargestellt werden, dass die Objekte verschiedener Hierarchieebenen oder Menüstufen hintereinander angeordnet erscheinen. Die Ausgabe 80 wird dabei insbesondere perspektivisch so erzeugt, dass eine Anordnung entlang einer dreidimensionalen Struktur, etwa entlang konzentrischer Ringe oder Walzen, dargestellt wird. Beim Wechsel der Hierarchieebene oder Menüstufe bewegt sich die Perspektive der dargestellten Ansicht zu den Objekten der anderen Hierarchieebene.

Kontexte beziehungsweise Objekte 82, 83 auf der gleichen Hierarchieebene werden bei dem Ausführungsbeispiel wie auf einem Karussell seitlich nebeneinander und leicht perspektivisch nach hinten versetzt dargestellt. Die äußeren Kacheln beziehungsweise Objekte 82, 83 werden angeschnitten dargestellt, um zu verdeutlichen, dass sich daneben weitere Inhalte befinden. Beim Öffnen eines Kontextes beziehungsweise eines Objekts 82 wird ein Wechsel in eine tiefere Menüebene durchgeführt und es wird ein Heranzoomen an die entsprechende Kachel dargestellt, wobei die ausgewählte, mittlere Kachel kurzzeitig vergrößert wird. Anschließend wird wieder eine Verkleinerung bis hin zur erneuten Darstellung von drei Kontexten auf der dann tieferen Menüebene dargestellt.

Das Schließen eines Kontextes beziehungsweise Objekts 82 und damit der Wechsel in eine höhere Menüebene wird als perspektivisches Entfernen von der Kachel ausgegeben. In der Anzeige wird dazu das mittlere, automatisch ausgewählte beziehungsweise Objekt 82 verkleinert und anschließend erfolgt wieder eine Vergrößerung bis hin zur erneuten Darstellung von beispielsweise drei Kontexten auf der dann höheren Menüebene.

Durch die beschriebenen visuellen Animationen wird dem Nutzer als visuelle Unterstützung ausgegeben, in welcher Bedienrichtung sich der Nutzer durch die Menühierarchie bewegt, sodass er eine bessere Orientierung über die Menüstruktur und seine aktuelle Position innerhalb der Hierarche erhält.

Bei einem weiteren Ausführungsbeispiel werden ferner Listeninhalte, etwa Einträge eines Telefonbuchs, vertikal statt horizontal angeordnet ausgegeben. Auch hier wird eine perspektivische Anordnung der Einträge entlang einer Walzen- oder Karussellstruktur dargestellt. Die oberen und unteren Elemente werden jeweils angeschnitten dargestellt um zu verdeutlichen, dass sich daneben weitere Inhalte befinden. Ein Ebenenwechsel kann wie oben mit Bezug zu Figur 8D erläutert durchgeführt werden.

Zusätzlich zum visuellen Unterstützen des Ebenenwechsels kann ferner eine akustisch oder haptisch wahrnehmbarer Ausgabe erzeugt werden.

### Bezugszeichenliste

- 1: Fahrzeug
- 2: Touchscreen
- 3: Ausgabeeinheit; Anzeigeeinheit
- 4: Erfassungseinheit; berührungsempfindliche Oberfläche
- 5: Erfassungseinheit; Kamera
- 6: Ausgabeeinheit; Lautsprecher
- 7: Erfassungsbereich
- 8: Steuereinheit
- 9: Einrichtung; Multimediaeinheit
- 20: Bedienoberfläche
- 21: Schematische Darstellung einer Hand
- 22 bis 25: Grafisches Objekt
- S1 bis S6: Schritt
- 40: Ausgabe
- 41, 42: Pfeil ("*Swipe,* vertikal")
- 43, 44: Pfeil ("*Swipe*, horizontal")
- 45, 46: Pfeil (perspektivisch)
- 50: Ausgabe
- 51: Lautstärke-Bedienobjekt
- 52: Lautstärkesymbol
- 53: Zeigerobjekt
- 54: Skalenobjekt
- 55: Grafisches Objekt
- 60: Ausgabe
- 61: Popup
- 62: Bedienelement (Annehmen)
- 63: Bedienelement (Ablehnen)
- 64: Dynamisches Objekt (nach vorne)
- 65: Dynamisches Objekt (nach hinten)
- 66: Hintergrunddarstellung
- 67: Bedienelement (Halt)
- 68: Bedienelement (Kontextmenü)
- 69a, 69b: Bedienelement (Spulen)
- 70: Ausgabe
- 71: Popup
- 72: Helligkeitssymbol
- 73: Bedienelement ("An")
- 74: Bedienelement ("Aus")
- 75: Grafisches Objekt
- 80: Ausgabe
- 81: Widget (Nahmodus)
- 82: Ausgewähltes Objekt
- 83: Weiteres Objekt
- 84: Hand
- 85: Pfeil
- 86: Weiteres Objekt
- 87: Ausgewähltes Objekt
- 88: Hinweise auf "OK"-Geste
- 89: Hinweise auf "Stopp"-Geste

## Patentansprüche

1. Verfahren zum Erfassen einer Nutzereingabe für eine Einrichtung eines Fahrzeugs, bei dem
eine bedienbare Funktion der Einrichtung erfasst wird;
in Abhängigkeit von der bedienbaren Funktion ein erster und ein zweiter potentieller Bedienhandlungstyp bestimmt werden;
ein bevorzugter Bedienhandlungstyp bestimmt wird; und
in Abhängigkeit von dem bevorzugten Bedienhandlungstyp eine Ausgabe erzeugt und ausgegeben wird; wobei
die Ausgabe ein Bedienobjekt umfasst, anhand dessen einem Nutzer der bevorzugte Bedienhandlungstyp angezeigt wird,**dadurch gekennzeichnet, dass**
die bestimmten potentiellen Bedienhandlungstypen verschiedenen Bedienmodalitäten zugeordnet sind; wobei eine bevorzugte Bedienmodalität bestimmt wird und der bevorzugte Bedienhandlungstyp anhand der bevorzugten Bedienmodalität bestimmt wird.

2. Verfahren gemäß Anspruch 1,
**dadurch gekennzeichnet, dass**
die Ausgabe, wenn der bevorzugte Bedienhandlungstyp eine Raumgeste umfasst, ein bewegtes Objekt umfasst, das eine Bewegung entsprechend einer Richtung der Raumgeste aufweist.

3. Verfahren gemäß einem der vorhergehenden Ansprüche,
**dadurch gekennzeichnet, dass**
die Ausgabe, wenn der bevorzugte Bedienhandlungstyp eine Raumgeste umfasst, eine schematische grafische Darstellung einer Hand (21) umfasst.

4. Verfahren gemäß einem der vorhergehenden Ansprüche,
**dadurch gekennzeichnet, dass**
die Ausgabe, wenn der erste, bevorzugte Bedienhandlungstyp einen Sprachbefehl umfasst, eine Textdarstellung des Sprachbefehls umfasst.

5. Verfahren gemäß einem der vorhergehenden Ansprüche,
**dadurch gekennzeichnet, dass**
ferner eine Bedienhandlung erfasst wird, die keinem potentiellen Bedienhandlungstyp zuordenbar ist, und
anhand der bedienbaren Funktion und der erfassten Bedienhandlung eine Intentionshypothese bestimmt wird; wobei
die Ausgabe anhand der Intentionshypothese erzeugt wird.

6. Verfahren gemäß einem der vorhergehenden Ansprüche,
**dadurch gekennzeichnet, dass**
eine Nutzerposition relativ zu einer Eingabevorrichtung erfasst wird und der bevorzugte Bedienhandlungstyp in Abhängigkeit von der Nutzerposition eine Betätigung der Eingabevorrichtung oder eine Raumgeste umfasst.

7. Verfahren gemäß einem der vorhergehenden Ansprüche,
**dadurch gekennzeichnet, dass**
die Ausgabe visuell, akustisch oder haptisch wahrnehmbar ausgegeben wird.

8. Bediensystem zum Erfassen einer Nutzereingabe für eine Einrichtung eines Fahrzeugs, umfassend
eine Steuereinheit (8); sowie
eine Ausgabeeinheit (3), die mit der Steuereinheit (8) gekoppelt ist; wobei
die Steuereinheit (8) dazu eingerichtet ist, eine bedienbare Funktion des Bediensystems zu erfassen; in Abhängigkeit von der bedienbaren Funktion einen ersten und einen zweiten potentiellen Bedienhandlungstyp für die bedienbare Funktion zu bestimmen; und einen bevorzugten Bedienhandlungstyp zu bestimmen; wobei
die Steuereinheit (8) ferner dazu eingerichtet ist, in Abhängigkeit von dem bevorzugten Bedienhandlungstyp eine Ausgabe zu erzeugen und mittels der Ausgabeeinheit (3) auszugeben; wobei
die Ausgabe ein Bedienobjekt umfasst, anhand dessen einem Nutzer der bevorzugte Bedienhandlungstyp angezeigt wird,
**dadurch gekennzeichnet, dass**
die bestimmten potentiellen Bedienhandlungstypen verschiedenen Bedienmodalitäten zugeordnet sind und
die Steuereinheit (8) dazu eingerichtet ist, eine bevorzugte Bedienmodalität zu bestimmen und den bevorzugten Bedienhandlungstyp anhand der bevorzugten Bedienmodalität zu bestimmen.

9. Bediensystem gemäß Anspruch 8,
**gekennzeichnet durch**
eine Erfassungseinheit zum Erfassen einer Bedienhandlung, insbesondere mit einer Kamera (5) zum Erfassen einer Geste in einem Erfassungsbereich (7), einer berührungsempfindlichen Oberfläche (4) und/oder einer Spracherfassungseinheit.

## Claims

1. Method for detecting a user input for a device of a vehicle, in which
an operable function of the device is detected;
a first and a second potential operating action type are determined on the basis of the operable function;
a preferred operating action type is determined; and
an output is generated on the basis of the preferred operating action type and is output; wherein
the output comprises an operating object, on the basis of which the preferred operating action type is displayed to a user, **characterized in that**
the determined potential operating action types are assigned to various operating modalities; wherein a preferred operating modality is determined and the preferred operating action type is determined on the basis of the preferred operating modality.

2. Method according to Claim 1,
**characterized in that**
the output, when the preferred operating action type comprises a spatial gesture, comprises a moving object which has a movement corresponding to a direction of the spatial gesture.

3. Method according to one of the preceding claims, **characterized in that**
the output, when the preferred operating action type comprises a spatial gesture, comprises a schematic graphical representation of a hand (21).

4. Method according to one of the preceding claims, **characterized in that**
the output, when the first preferred operating action type comprises a voice command, comprises a text representation of the voice command.

5. Method according to one of the preceding claims, **characterized in that**
an operating action that cannot be assigned to a potential operating action type is also detected, and
an intention hypothesis is determined on the basis of the operable function and the detected operating action; wherein
the output is generated on the basis of the intention hypothesis.

6. Method according to one of the preceding claims, **characterized in that**
a user position relative to an input apparatus is detected and the preferred operating action type comprises actuation of the input apparatus or a spatial gesture on the basis of the user position.

7. Method according to one of the preceding claims, **characterized in that**
the output is output in a visually, acoustically or haptically perceptible manner.

8. Operating system for detecting a user input for a device of a vehicle, comprising
a control unit (8); and
an output unit (3) which is coupled to the control unit (8); wherein
the control unit (8) is configured to detect an operable function of the operating system; to determine a first and a second potential operating action type for the operable function on the basis of the operable function; and to determine a preferred operating action type; wherein
the control unit (8) is also configured to generate an output on the basis of the preferred operating action type and to output it by means of the output unit (3); wherein
the output comprises an operating object, on the basis of which the preferred operating action type is displayed to a user,
**characterized in that**
the determined potential operating action types are assigned to various operating modalities, and
the control unit (8) is configured to determine a preferred operating modality and to determine the preferred operating action type on the basis of the preferred operating modality.

9. Operating system according to Claim 8,
**characterized by**
a detection unit for detecting an operating action, in particular having a camera (5) for detecting a gesture in a detection region (7), a touch-sensitive surface (4) and/or a voice detection unit.

## Revendications

1. Procédé permettant de détecter une entrée utilisateur pour un dispositif d'un véhicule, dans lequel
une fonction utilisable du dispositif est détectée ;
un premier et un deuxième type d'action d'utilisation potentiels sont déterminés en fonction de la fonction utilisable ;
un type d'action d'utilisation préféré est déterminé ; et
en fonction du type d'action d'utilisation préféré, une sortie est produite et émise ; dans lequel
la sortie comprend un objet d'utilisation à l'aide duquel le type d'action d'utilisation préféré est affiché pour un utilisateur,
**caractérisé en ce que** les types d'action d'utilisation potentiels déterminés sont associés à différentes modalités d'utilisation ; dans lequel une modalité d'utilisation préférée est déterminée et le type d'action d'utilisation préféré est déterminé à l'aide de la modalité d'utilisation préférée.

2. Procédé selon la revendication 1, **caractérisé en ce que** la sortie, si le type d'action d'utilisation préféré comprend un geste spatial, comprend un objet en mouvement qui présente un mouvement selon une direction du geste spatial.

3. Procédé selon l'une quelconque des revendications précédentes, **caractérisé en ce que** la sortie, si le type d'action d'utilisation comprend un geste spatial, comprend une représentation graphique schématique d'une main (21).

4. Procédé selon l'une quelconque des revendications précédentes, **caractérisé en ce que** la sortie, si le premier type d'action d'utilisation préféré comprend une commande vocale, comprend une représentation textuelle de la commande vocale.

5. Procédé selon l'une quelconque des revendications précédentes, **caractérisé en ce que**
en outre une action d'utilisation est détectée qui ne peut être associée à aucun type d'action d'utilisation potentiel, et
une hypothèse d'intention est déterminée à l'aide de la fonction utilisable et de l'action d'utilisation détectée ;
la sortie étant produite à l'aide de l'hypothèse d'intention.

6. Procédé selon l'une quelconque des revendications précédentes, **caractérisé en ce qu'**une position d'utilisateur par rapport à un dispositif d'entrée est détectée, et le type d'action d'utilisation préféré comprend en fonction de la position d'utilisateur un actionnement du dispositif d'entrée ou un geste spatial.

7. Procédé selon l'une quelconque des revendications précédentes, **caractérisé en ce que** la sortie est émise de manière perceptible visuellement, acoustiquement ou haptiquement.

8. Système d'utilisation permettant de détecter une entrée utilisateur pour un dispositif d'un véhicule, comprenant
une unité de commande (8) ; et
une unité de sortie (3) qui est couplée à l'unité de commande (8) ; dans lequel
l'unité de commande (8) est conçue pour détecter une fonction utilisable du système d'utilisation ; en fonction de la fonction utilisable, pour déterminer un premier et un deuxième type d'action d'utilisation potentiels pour la fonction utilisable ; et pour déterminer un type d'action d'utilisation préféré ; dans lequel
l'unité de commande (8) est en outre conçue pour produire une sortie en fonction du type d'action d'utilisation préféré et pour l'émettre au moyen de l'unité de sortie (3) ; dans lequel
la sortie comprend un objet d'utilisation à l'aide duquel le type d'action d'utilisation est affiché pour un utilisateur,
**caractérisé en ce que**
les types d'action d'utilisation potentiels déterminés sont associés à différentes modalités d'utilisation, et l'unité de commande (8) est conçue pour déterminer une modalité d'utilisation préférée et pour déterminer le type d'action d'utilisation préféré à l'aide de la modalité d'utilisation préférée.

9. Système d'utilisation selon la revendication 8, **caractérisé par** une unité de détection pour détecter une action d'utilisation, comprenant en particulier une caméra (5) pour détecter un geste dans une zone de détection (7), une surface tactile (4) et/ou une unité d'acquisition vocale.
